# EUROPEAN PATENT APPLICATION

(11) **EP 4 191 289 A1**
(43) Date of publication of application: **07.06.2023**
(21) Application number: 20948106.8
(22) Date of filing: 03.08.2020
(51) Int. Cl.: G01W 1/10

(54) **TURBULENCE PREDICTION SYSTEM AND TURBULENCE PREDICTION METHOD**

(71) Applicant: Ana Holdings Inc., Tokyo, 105-7140 (JP); Keio University, Tokyo, 108-8345 (JP)
(72) Inventor: MATSUMOTO Ayako, Tokyo 105-7140 (JP); MIYAMOTO Yoshiaki, Fujisawa-shi, Kanagawa 252-0882 (JP)
(74) Representative: Grünecker Patent- und Rechtsanwälte PartG mbB
(86) International application number: PCT/JP2020/029694
(87) International publication number: WO 2022/029847

(57) **Abstract**

There is provided the turbulence prediction system or the turbulence prediction method that predicts a zone in a prediction area where the possibility of the occurrence of a turbulence is high at a determination time point. The problem is solved by the turbulence prediction system or the turbulence prediction method that makes a plurality of pieces of turbulence prediction pattern data regarding an arbitrary meteorological parameter that is made based on meteorological data regarding the arbitrary meteorological parameter at a zone where a turbulence occurred in the past, makes determination-purposed meteorological data based on meteorological data regarding the arbitrary meteorological parameter for the prediction area at the determination time point, calculates a portion having a high degree of similarity between the determination-purposed meteorological data and the plurality of pieces of turbulence prediction pattern data, and determines the location having the high degree of similarity as a zone having a high possibility of the occurrence of a turbulence in the prediction area.

## Description

### Technical Field

The present invention relates to a turbulence prediction system and method, especially a turbulence prediction system and method for providing a service of an aircraft.

### Background Art

In the case where the existence of turbulence on the planned airline route is known after the start of the flight, although it is necessary to make a determination to change the airline route to avoid the turbulence during the flight before reaching the location of the turbulence, there is a problem that the optimum airline route cannot be selected by changing the airline route after starting the flight.

Therefore, it is desirable to be able to predict the occurrence of turbulence on an airline route in a short time period, with a low computational load, and with high accuracy.

### Citation List

### Patent Literature

PTL 1: Japanese Patent Application Laid-open No. 2003-67900
PTL 2: Japanese Patent Application Laid-open No. 2009-192262

### Summary of Invention

### Technical Problem

The generation of turbulence is complicated because topographical conditions and fluid conditions of air are involved in a complicated manner, so that there is a limit to predict the occurrence of turbulence by obtaining a mathematical model relating to the physical behavior of the fluid resulting in the generation of turbulence. Therefore, for example, in the conventional methods and systems for predicting turbulence as disclosed in PTL 1 and PTL 2, based on a model of the physical behavior of the fluid with respect to the generation of the turbulence, the turbulence is calculated by selecting and calculating conceivable parameters or indexes are a simple model of turbulence.

In the methods disclosed in PTL 1 and PTL 2, the parameters or indices calculated for prediction are determined based on a mathematical model regarding the physical behavior of fluids resulting in the generation of turbulent airflow. That is, the methods disclosed in PTL 1 and PTL 2 take advantage of a process to obtain solutions from a mathematical model of fluid physical behavior related to the generation of turbulence. In general, because it causes the large calculation load and is not realistic to precisely calculate an exact solution from a mathematical model related to fluid behavior resulting in the generation of turbulence, a simple model in which mathematical model of fluid behavior is simplified tends to be used. In PTL 1 and PTL 2, this method is used to predict the occurrence of turbulence. The method of using a simple model with an exact solution affects the accuracy of turbulence prediction, while the method of analyzing with a model close to the exact solution still causes the problem of increasing the computational load. Therefore, there is a demand for a system that predicts the occurrence of turbulence based on new idea.

### Solution to Problem

One aspect of the present invention for solving the above problems is a turbulence prediction system comprising a calculation unit and a memory unit storing a plurality of turbulence prediction pattern data regarding arbitrary meteorological parameters, for predicting a zone having a possibility in which a turbulence highly causes among prediction areas at a determination time point, wherein each of the plurality of turbulence prediction pattern data regarding arbitrary meteorological parameters is made based on meteorological data regarding arbitrary meteorological parameters of a zone where a turbulence caused in the past, wherein the calculation unit makes determination-purposed meteorological data about the prediction areas at the determination time point based on meteorological data regarding the arbitrary meteorological parameters, wherein the calculation unit performs a calculation to obtain a high similarity part between the determination-purposed meteorological data and each of the plurality of turbulence prediction pattern data so that the high similarity part is determined as the zone having a possibility in which a turbulence highly causes among the prediction areas.

Another aspect of the present invention is a turbulence prediction method of predicting a possibility in which a turbulence causes in prediction areas, by a turbulence prediction system comprising a memory unit and a calculation unit, wherein the turbulence prediction method comprises a learning process and a determination process, wherein the learning process includes a process to make a plurality of turbulence prediction pattern data based on meteorological data regarding arbitrary meteorological parameters of a zone where a turbulence caused in the past, by the calculation unit and to store in the memory unit, wherein the determination process includes a process to make determination-purposed meteorological data based on meteorological data regarding the arbitrary meteorological parameters in the prediction areas by the calculation unit, and a process to calculate a similarity each of between the determination-purposed meteorological data and the plurality of turbulence prediction pattern data and determine a high similarity portion as a zone having a possibility in which a turbulence highly causes in an arbitrary area among the prediction areas, by the calculation unit.

### Advantageous Effects of Invention

According to the turbulence prediction system and the turbulence prediction method of the present invention, the occurrence of the turbulence can be predicted with a low calculation load and high accuracy, based on the actual data of the occurrence of turbulence without using a mathematical model regarding the physical behavior of the fluid regarding the occurrence of turbulence.

### Brief Description of Drawings

Fig. 1A is a drawing depicting the first turbulence prediction pattern principle of the present invention.
Fig. 1B is a drawing depicting the second turbulence prediction pattern principle of the present invention.
Fig. 1C is a drawing depicting the third turbulence prediction pattern principle of the present invention.
Fig. 1D is a drawing depicting the fourth turbulence prediction pattern principle of the present invention.
Fig. 1E is a drawing depicting the fifth turbulence prediction pattern principle of the present invention.
Fig. 2A is a drawing depicting one representative configuration of a turbulence prediction system as an embodiment of the present invention.
Fig. 2B is a drawing depicting a typical configuration of a turbulence prediction device of the turbulence prediction system as an embodiment of the present invention.
Fig. 2C is a drawing depicting another representative configuration of the turbulence prediction system as an embodiment of the present invention.
Fig. 2D is a drawing depicting the form of data used in the turbulence prediction system of the present invention.
Fig. 3 is a drawing schematically depicting a learning process and a determination process of the turbulence prediction system 1 as an embodiment of the present invention.
Fig. 4A is a drawing depicting a flowchart of a learning process in an example using one meteorological parameter, which is Embodiment 1 of the turbulence prediction system of the present invention.
Fig. 4B is a drawing schematically depicting the process of making discrete meteorological parameter data in the learning process of Embodiment 1 of the turbulence prediction system of the present invention.
Fig. 4C is a schematic drawing depicting the process of making turbulence data in the learning process of embodiment 1 of the turbulence prediction system of the present invention.
Fig. 4D is a schematic drawing depicting the process of making turbulence prediction pattern data in the learning process of Embodiment 1 of the turbulence prediction system of the present invention.
Fig. 4E is a drawing depicting a flow chart of a determination process in an example using one meteorological parameter, which is Embodiment 1 of the turbulence prediction system of the present invention.
Fig. 5A is a drawing depicting a flow chart of a learning process in an example using a plurality of meteorological parameters, which is Embodiment 2 of the turbulence prediction system of the present invention.
Fig. 5B is a drawing depicting a flow chart of a determination process in an example using a plurality of meteorological parameters, which is Embodiment 2 of the turbulence prediction system of the present invention.
Fig. 5C is a drawing schematically depicting the process of making a turbulence prediction pattern data in the learning process of Embodiment 2 of the turbulence prediction system of the present invention.
Fig. 5D is a drawing schematically depicting a process of making one set of combined determination-purposed meteorological data in the determination process of the Embodiment 2 of the turbulence prediction system of the present invention.
Fig. 6A is a drawing depicting a flowchart of a learning process in an example of using turbulence prediction pattern data based on a plurality of continuous-discrete time meteorological data, which is Embodiment 3 of the turbulence prediction system of the present invention.
Fig. 6B is a drawing depicting a flowchart of a determination process in an example of determination-purposed meteorological data based on a plurality of continuous-discrete time meteorological data, which is Embodiment 3 of the turbulence prediction system of the present invention.
Fig. 6C is a drawing schematically depicting a process of making a turbulence prediction pattern data in the learning process of Embodiment 3 of the turbulence prediction system of the present invention.
Fig. 6D is a drawing schematically depicting a process of making one set of combined determination-purposed meteorological data in the determination process of Embodiment 3 of the turbulence prediction system of the present invention.

### Description of Embodiments

### (Principle of turbulence prediction)

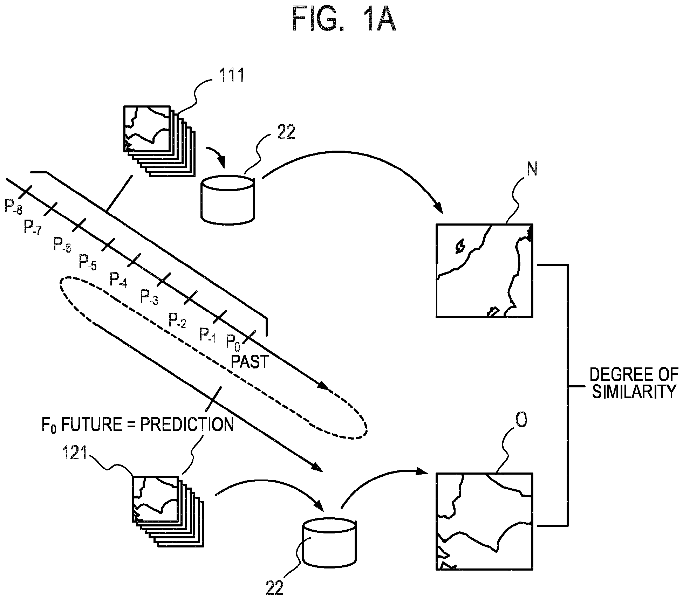

First, with reference to Figs. 1A to 1E, it is explained, the principle of turbulence prediction in the turbulence prediction system and the turbulence prediction method of the present invention. Figs. 1A to 1E are drawings depicting patterns in turbulence prediction principles, and Figs. 1A to 1E respectively show the first to fifth turbulence prediction pattern principles.

The turbulence prediction system and turbulence prediction method in the present invention is to predict points where turbulence is likely to occur in the prediction area at the time point of determination. In the turbulence prediction of the present invention, as common to the first turbulence prediction pattern principle to the fifth turbulence prediction pattern principle (Figs. 1A to 1E), it is characterized by predicting turbulence by comparing data made between the past time points and the subsequent determination time points.

Past time points (P₀, P₋₁, P₋₂...) are the times defined in the learning process of accumulating data as teacher data as past facts that turbulence occurred. A past time point is defined as a time point before a determination time point, and is a time point when it is clear that turbulence has occurred. The time point at which turbulence is predicted using this teacher data is the determination time point. The determination time point is the future time point (F₀, F₋₁, F₋₂) as determination time points at which it is required to predict turbulence in the first, second and fourth turbulence prediction pattern principles because meteorological prediction is used, and the current time point (C₀, C₋₁, C₋₂) in the third and fifth turbulence prediction pattern principles. The current time point is defined as not the meaning of the current from hour to hour, but the determination time point at which it is required to predict turbulence. In the third turbulence prediction pattern principle and the fifth turbulence prediction pattern principle, it is used, not weather predicts but trends in weather changes immediately prior to the determination time point.

The prediction area is an arbitrary area where it is desired to predict the occurrence of turbulence, and an area that can be chosen as arbitrary area where meteorological data about an arbitrary meteorological parameter and data about the occurrence or non-occurrence of turbulence at the same time point at the meteorological data can be obtained, such as the Japanese archipelago. An arbitrary meteorological parameter is a meteorological factor that may affect turbulence, typically a wind speed and a wind shear.

In the turbulence prediction of the present invention, a portion having a high degree of similarity between determination-purposed meteorological data and each of a plurality of turbulence prediction pattern data as teacher data is calculated, and then areas with a high degree of similarity are identified an area with a high possibility of occurrence of a turbulence in the prediction area. Each of the plurality of turbulence prediction pattern data as teacher data is made in advance in a learning process. Determination-purposed meteorological data is made at the time point of determination process. Based on this principle, there are various variations in making determination-purposed meteorological data and a plurality of pieces of turbulence prediction pattern data. In addition, there are various variations in the calculation of a portion with a high degree of similarity. These are the first turbulence prediction pattern principle to the fifth turbulence prediction pattern principle.

### (First turbulence prediction pattern principle)

With reference to Fig. 1A, the principle of the first turbulence prediction pattern will be explained. The first turbulence prediction pattern principle is the basic form of turbulence prediction pattern. According to the first turbulence prediction pattern principle, a plurality of turbulence prediction pattern data 111 are obtained based on meteorological data relating to the arbitrary meteorological parameters of the zone where the turbulence occurred in the past time point (P₀, P₋₁, P₋₂ ...) and made in advance by a learning process. The arbitrary meteorological parameters are one or more meteorological parameters. In the past, it is natural that the number of pieces of a plurality of turbulence prediction pattern data 111 are numerous because turbulence occurs at many time points and zones. A plurality of turbulence prediction pattern data 111 are stored in the storage device 22 and updated sequentially. In the determination process, determination-purposed meteorological data 121 is made based on meteorological data relating to arbitrary meteorological parameters for the whole prediction area at the time point of determination. The meteorological data is meteorological predict data at the determination time point that is the future time points (F₀, F₋₁, F₋₂, . . . ). Arbitrary meteorological parameters are common to the determination-purposed meteorological data and the plurality of turbulence prediction pattern data as teacher data. Since the prediction area for which turbulence prediction is desired is generally wider, it is divided and stored in the storage device 22 as a plurality of pieces of data.

In the determination process, the determination-purposed meteorological data O stored in the storage device 22 and the turbulence prediction pattern data N of the plurality of turbulence prediction pattern data 111 stored in the storage device 22 are compared to determine the degree of similarity. The degree of similarity can be determined, for example, by forming into image data, the meteorological data O for determination and the turbulence prediction pattern data N of the plurality of turbulence prediction pattern data 111 and comparing the respective image data. Then, the degree of similarity can be the presence or absence of common characteristic features. Characteristic features can be calculated using a variety of methods. For example, it is possible to extract a feature amount of an image and calculate the degree of similarity from the tendency of its appearance. A convolutional neural network (hereinafter referred to as CNN) can also be used for the first to third turbulence prediction pattern principles. In CNN, it is possible to calculate the presence or absence of common characteristic features without recognizing the process of extracting characteristic features of images.

Each of the plurality of turbulence prediction pattern data 111 is data of meteorological parameters in which turbulence actually occurred in a certain region, but there is no regional dependence, and for all of the determination-purposed meteorological data O, it is determined whether or not there is a common characteristic portion with each of the turbulence prediction pattern data N of the plurality of turbulence prediction pattern data 111. In the determination-purposed meteorological data O, because areas corresponding to locations where there is a common characteristic portion with any one of the plurality of turbulence prediction pattern data N of the plurality of turbulence prediction pattern data 111 means that characteristics in which turbulence occurred in past is included in the determination-purposed meteorological data O based on the weather predict, the area corresponding to those points is determined to be a point with a high possibility of occurrence of turbulence in the prediction area.

### (Second turbulence prediction pattern principle)

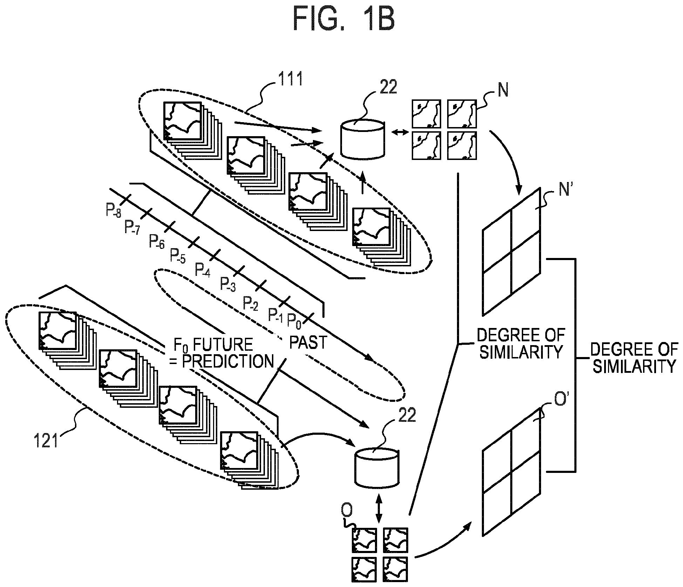

The principle of the second turbulence prediction pattern is explained with reference to Fig. 1B. In the second turbulence prediction pattern principle, arbitrary meteorological parameters in the case of making the plurality of turbulence prediction pattern data 111 and determination-purposed meteorological data 121 in the first turbulence prediction pattern principle are used as the plurality of meteorological parameters. The rest is the same as the first turbulence prediction pattern principle. For example, four meteorological parameters are selected as a plurality of meteorological parameters: east-west wind speed, north-south wind speed, east-west wind shear, and north-south wind shear. Then, for each of the plurality of meteorological parameters, a plurality of turbulence prediction pattern data 111 are made in the same manner as in the first turbulence prediction pattern principle. For example, when four types of meteorological parameters are selected, four types of turbulence prediction pattern data 111 are made. The determination-purposed meteorological data 121 is similarly made for each of the plurality of meteorological parameters 111 that are the same as the plurality of turbulence prediction pattern data 111. Then, for each corresponding meteorological parameter, in the similar manner to the first turbulence prediction pattern principle, in the determination process, the degree of similarity is determined by comparing the determination-purposed meteorological data O stored in the storage device 22 with each turbulence prediction pattern data N of the plurality of turbulence predictions pattern data 111 stored in the storage device 22 so that the location is determined as a point with a high possibility of occurrence of turbulence in the prediction area.

In calculating the degree of similarity, it can also be performed in the same manner as in the first turbulence prediction pattern principle for each corresponding meteorological parameter. However, in calculating the degree of similarity, the greater the amount of information in the data to be compared, the more prominent the common characteristic portion can be, so that the calculation of the degree of similarity can be easier. Therefore, the degree of similarity can also be calculated as follows. Among the plurality of turbulence prediction pattern data 111, a plurality of turbulence prediction pattern data N for each of the plurality of meteorological parameters are arranged in a predetermined arrangement for each of the plurality of meteorological parameters to defined as one set of combined turbulence prediction pattern data N'. On the other hand, the determination-purposed meteorological data O for each of the plurality of meteorological parameters are arranged in the same predetermined arrangement as the arrangement in the case where one set of combined turbulence prediction pattern data N' is defined as one set of combined determination-purposed meteorological data O'. Then, the degree of similarity can be calculated by comparing one set of combined determination prediction pattern data N' with one combined determination-purposed meteorological data O'. By combining data for each of a plurality of meteorological parameters to form one set of combined data, it is possible to increase the number of pixels in one piece of image data, so that the amount of information in the image data can be increased.

### (Third turbulence prediction pattern principle)

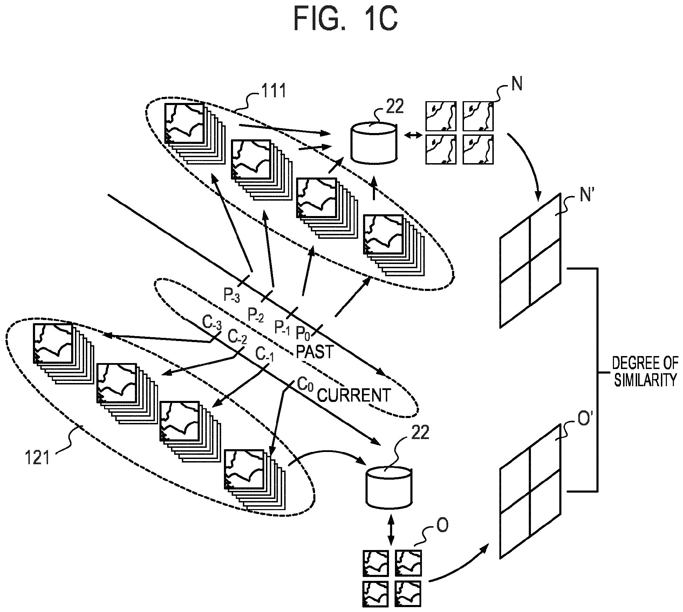

With reference to Fig. 1C, the principle of the third turbulence prediction pattern will be explained. The third turbulence prediction pattern principle is a method that, when making determination-purposed meteorological data, does not use weather predicts, unlike the first turbulence prediction pattern principle and the second turbulence prediction pattern principle which use weather predicts. First, one meteorological parameter is selected as an arbitrary meteorological parameter. Then, when making the determination-purposed meteorological data 121, the data is not made on the basis of meteorological data at future time points such as weather predicts, but instead is made based on meteorological data at each of a predetermined number of time points (C₀, C₋₁, C₋₂, C₋₃) that have a predetermined time interval therebetween at the present time that is the determination time point. That is, in the determination process, the determination-purposed meteorological data 121 is made using meteorological data at a predetermined number of time points that have a predetermined time interval therebetween for an arbitrary one meteorological parameter, and the respective pieces of data are formed into a single group. This data is made over the whole prediction area and stored in the storage device 22. On the other hand, in the learning process, a plurality of turbulence prediction pattern data 111 is made in advance so as to form a single group consisting of meteorological data at one time point (P₀) in the past at which turbulence occurred that is meteorological data of a meteorological parameter with respect to which turbulence actually occurred in a certain region, and meteorological data of a meteorological parameter made based on time points (P₋₁, P₋₂, P₋₃) going back into the past at predetermined time intervals from the aforementioned time point, and stored in the storage device 22. This data is made for all areas of the divided areas. The predetermined number of past time points (P₀, P₋₁, P₋₂, P₋₃...P₋ᵢ) having a predetermined time interval therebetween that are selected when making the turbulence prediction pattern data 111, and the predetermined number of current time points (C₀, C₋₁, C₋₂, C₋₃...C₋ᵢ) having a predetermined time interval therebetween that are selected when making the determination-purposed meteorological data 121 are selected so as to be the same number of time points that have the same time interval therebetween. In the example in Fig. 1C, an example is depicted in which i = 3, and there are a total of four time points.

In calculating the degree of similarity, similarly to the second turbulence prediction pattern, for each group of a plurality of turbulence prediction pattern data 111, each of the time points of the turbulence prediction pattern data N constituting the respective groups are arranged in a predetermined arrangement and defined as one set of combined turbulence prediction pattern data N', and similarly, each of the time points of the determination-purposed meteorological data O constituting the determination-purposed meteorological data 121 are arranged in a predetermined arrangement and defined as one set of combined determination-purposed meteorological data O'. Then, the degree of similarity is calculated by comparing the one set of combined turbulence prediction pattern data N' and the one combined determination-purposed meteorological data O'. Although calculation of the degree of similarity according to the first turbulence prediction pattern principle and the second turbulence prediction pattern principle is based on the presence or absence of characteristic features by comparison with meteorological data at one time point that is based on a weather predict, in the calculation of the degree of similarity according to the third turbulence prediction pattern principle, whether or not one set of combined determination-purposed meteorological data O' has a characteristic feature that is common with one set of combined turbulence prediction pattern data N' with respect to changes over time in the occurrence of turbulence is determined by comparison with meteorological data at a predetermined number of time points having a predetermined time interval therebetween. That is, in the calculation of the degree of similarity according to the third turbulence prediction pattern principle, in the comparison of still images between one set of combined turbulence prediction pattern data N' and one set of combined determination-purposed meteorological data O', because a combined image has features of still images and common features of dynamic images of changes over time near the determination time, even when comparing still images, it is possible to determine the presence or absence of a characteristic feature of a process whereby turbulence occurs. In a case where there is a characteristic feature of a process whereby turbulence occurs that is common with the one set of combined turbulence prediction pattern data N' in the one set of combined determination-purposed meteorological data O', the relevant location is determined to be a zone in which there is a high possibility of turbulence occurring in the prediction area.

### (Fourth turbulence prediction pattern principle)

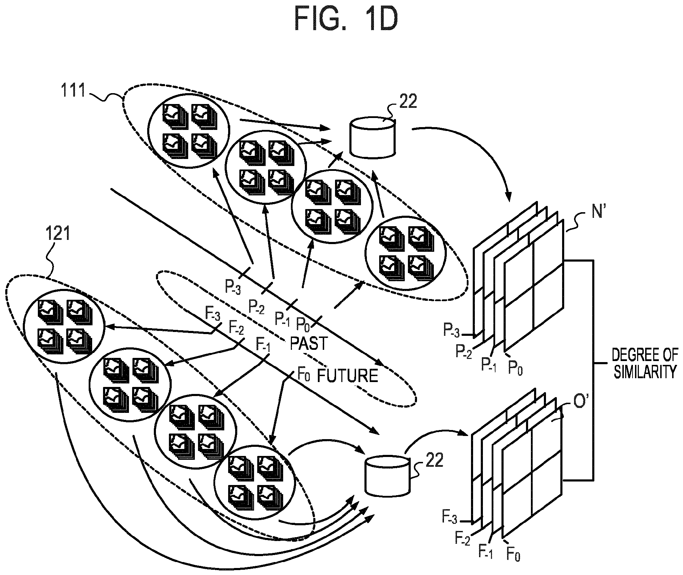

With reference to Fig. 1D, the principle of the fourth turbulence prediction pattern will be explained. According to the second turbulence prediction pattern principle described above, in calculating the degree of similarity, the number of meteorological parameters is increased so that there is a plurality of meteorological parameters, and thereby increase the amount of information of the image data that is compared. However, in the second turbulence prediction pattern principle, unlike the third turbulence prediction pattern principle, there is no comparison of elements relating to changes over time. Therefore, the fourth turbulence prediction pattern principle is a method in which a temporal element is added to the second turbulence prediction pattern principle that is described above. According to the fourth turbulence prediction pattern principle, similarly to the second turbulence prediction pattern principle, a plurality of meteorological parameters are selected as meteorological parameters. Firstly, similarly to the second turbulence prediction pattern principle, for the plurality of meteorological parameters, a plurality of turbulence prediction pattern data 111 is made in a learning process. In a determination process, the determination-purposed meteorological data 121 is also similarly made for each of a plurality of meteorological parameters 111 that are the same as the plurality of turbulence prediction pattern data 111. According to the fourth turbulence prediction pattern principle, in each of the learning process and the determination process, as in the second turbulence prediction pattern principle, among the plurality of turbulence prediction pattern data 111, a plurality of turbulence prediction pattern data N for each of the plurality of meteorological parameters are arranged in a predetermined arrangement for each of the plurality of meteorological parameters and defined as one set of combined turbulence prediction pattern data N', and the determination-purposed meteorological data O for each of the plurality of meteorological parameters are arranged in the same predetermined arrangement as the arrangement when making one set of combined turbulence prediction pattern data N', and defined as one set of combined determination-purposed meteorological data O'.

In addition, in the learning process, this is similarly performed with respect to a predetermined number of past time points (P₀, P₋₁, P₋₂, P₋₃...) having a predetermined time interval therebetween by going back into the past from the time point at which the turbulence prediction pattern data 111 was made, to thereby make one set of combined turbulence prediction pattern data N' for the predetermined number of past time points (P₀, P₋₁, P₋₂, P₋₃...) that have a predetermined time interval therebetween. In the determination process, one set of combined determination-purposed meteorological data O' is made at the same number of current time points (C₀, C₋₁, C₋₂, C₋₃...) which have the same time interval therebetween as the predetermined number that have a predetermined time interval therebetween selected at the time point at which the turbulence prediction pattern data 111 was made. In each of the learning process and the determination process, one set of combined turbulence prediction pattern data N' is made only for cases where turbulence occurred, and one set of combined determination-purposed meteorological data O' is made over the whole area of the divided areas, and the respective sets of data are stored in the storage device 22.

Calculation of the degree of similarity is performed by comparing the data for each of the current time points (C₀, C₋₁, C₋₂, C₋₃...) of the one set of combined determination-purposed meteorological data O' and the data for each of the past time points (P₀, P₋₁, P₋₂, P₋₃...) of the one set of combined turbulence prediction pattern data N'. At this time, calculation of the degree of similarity is executed so as to detect the presence or absence of common characteristic features by comparing changes over time at each time point (C₀, C₋₁, C₋₂, C₋₃...) of the one set of combined determination-purposed meteorological data O' and changes over time at each of the past time points (P₀, P₋₁, P₋₂, P₋₃...) of the one set of combined turbulence prediction pattern data N', in addition to the presence or absence of common characteristic features by comparing still images at each time point of the respective data. For example, a recurrent neural network (RNN) or the like can be applied to calculate the degree of similarity.

### (Fifth turbulence prediction pattern principle)

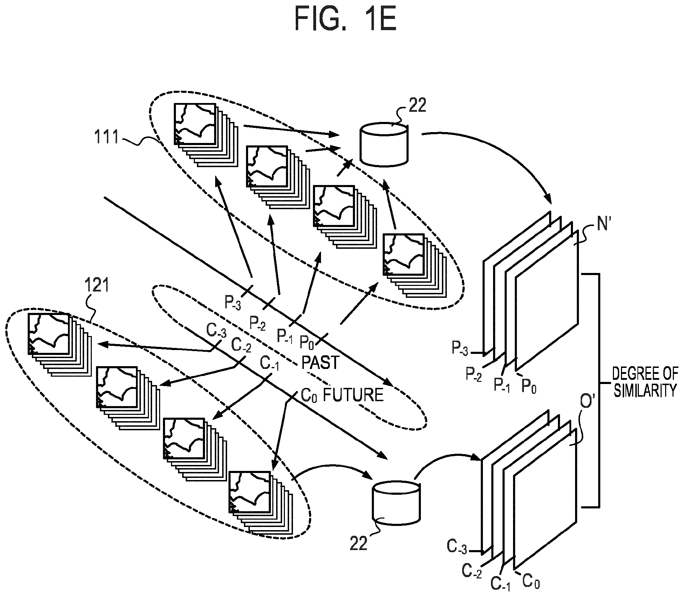

With reference to Fig. 1E, the principle of the fifth turbulence prediction pattern will be explained. Similarly to the fourth turbulence prediction pattern principle described above, the fifth turbulence prediction pattern principle is a method that utilizes a comparison of changes over time in calculating the degree of similarity. Further, creation of turbulence prediction pattern data 111 and determination-purposed data 121 is made in a similar manner to the third turbulence prediction pattern principle. That is, in the learning process, a plurality of turbulence prediction pattern data 111 is made in advance so as to form a single group consisting of meteorological data at one time point (P₀) in the past at which turbulence occurred that is meteorological data of a meteorological parameter with respect to which turbulence actually occurred in a certain region, and meteorological data of a meteorological parameter that is made based on time points (P₋₁. P₋₂, P₋₃...P₋₁) having a predetermined time interval therebetween that go back into the past from the aforementioned one time point, and the made data is stored in the storage device 22. This data is made for all areas of the divided areas. The determination-purposed meteorological data 121 is made based on meteorological data at each of a predetermined number of time points (C₀, C₋₁, C₋₂, C₋₃) with a predetermined time interval therebetween at the present time that is the determination time point, and these pieces of data are used to constitute a single group. This data is made over the whole prediction area and stored in the storage device 22. In the example in Fig. 1E, a case is depicted in which i = 3 and there are a total of four time points. Although according to the third turbulence prediction pattern principle, one set of combined turbulence prediction pattern data N' is made by combining turbulence prediction pattern data N made based on meteorological data at a predetermined number of past time points (P₀, P₋₁, P₋₂, P₋₃) having a predetermined time interval therebetween, according to the fifth turbulence prediction pattern principle the turbulence prediction pattern data N are not combined. The determination-purposed meteorological data O made based on meteorological data at each of a predetermined number of time points (C₀, C₋₁, C₋₂, C₋₃) having a predetermined time interval therebetween are also not combined. Determination of the degree of similarity is performed by comparing data for each of the current time points (C₀, C₋₁, C₋₂, C₋₃...) of the determination-purposed meteorological data O and data for each of the past time points (P₀, P₋₁, P₋₂, P₋₃...) of the turbulence prediction pattern data N, similarly to the fourth turbulence prediction pattern principle. At this time, calculation of the degree of similarity is executed so as to detect the presence or absence of common characteristic features by comparing changes over time at each time point (C₀, C₋₁, C₋₂, C₋₃...) of the determination-purposed meteorological data O and changes over time at each of the past time points (P₀, P₋₁, P₋₂, P₋₃...) of the turbulence prediction pattern data N, in addition to the presence or absence of common characteristic features by comparing still images at each time point of the respective data. For example, a recurrent neural network (RNN) or the like can be applied to calculate the degree of similarity, similarly to Embodiment 4.

### (Configuration of turbulence prediction system)

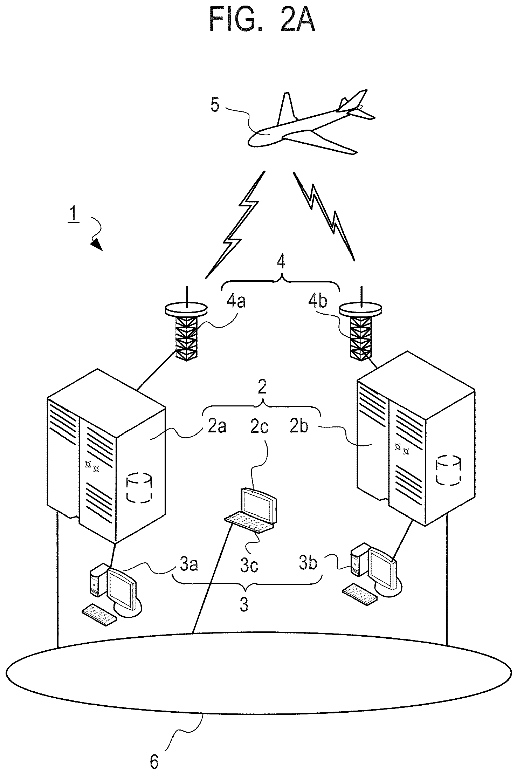

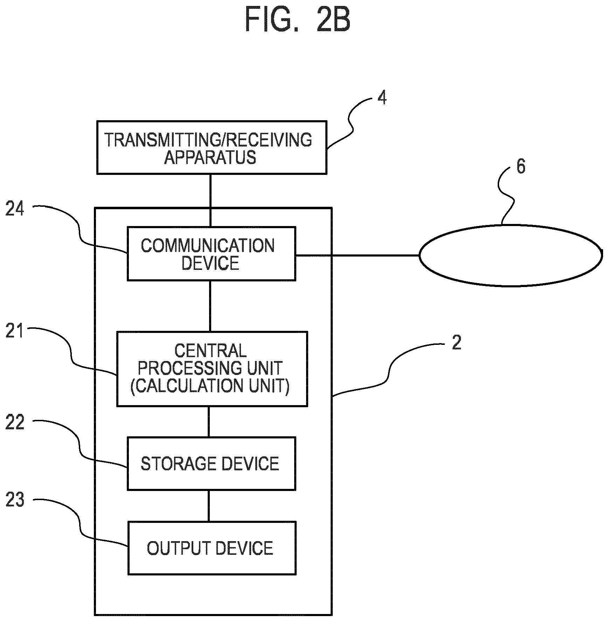

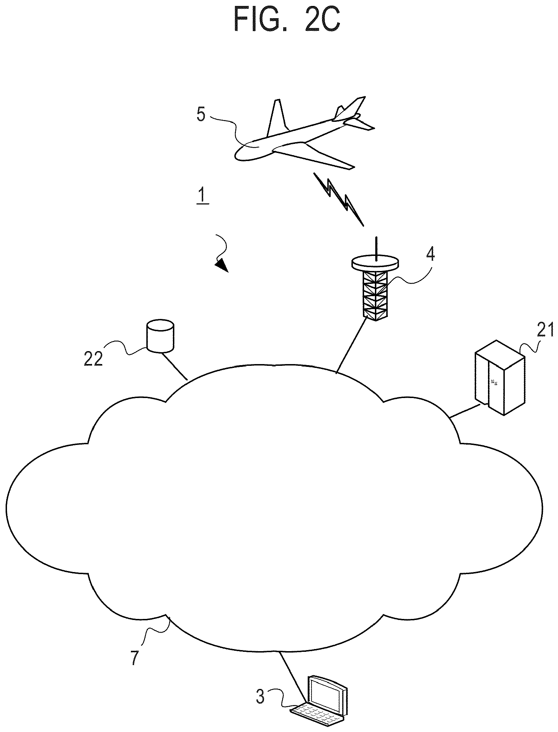

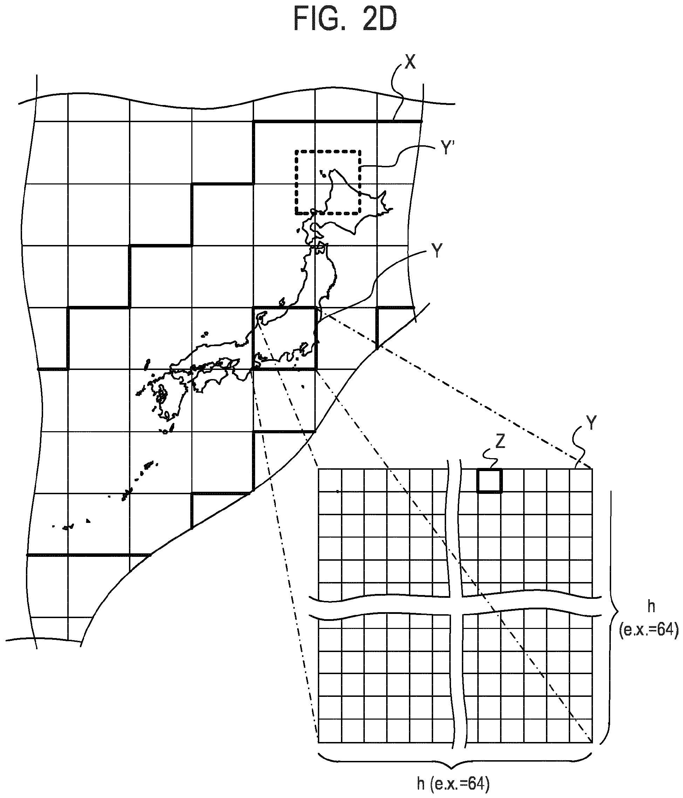

The first turbulence prediction pattern principle to the fifth turbulence prediction pattern principle described above can be implemented by the following embodiment. Hereunder, an embodiment of the present invention is described in detail. First, with respect to the embodiment of the present invention, the overall configuration of a turbulence prediction system 1 is described with reference to Fig. 2A to Fig. 2D. Fig. 2A is a drawing depicting one representative configuration of the turbulence prediction system 1. Fig. 2B is a drawing depicting a typical configuration of a turbulence prediction apparatus 2. Fig. 2C depicts a representative example of the turbulence prediction system 1 configured as a cloud computing system. Fig. 2D depicts the form of data division for predicting turbulence in the turbulence prediction system 1. The turbulence prediction system 1 includes, as the essential configuration, a calculation unit that performs calculation processing, and a memory unit. For example, the turbulence prediction system 1 can be configured to include one or more turbulence prediction apparatuses 2 that include a central processing unit 21 as a calculation unit and a storage device 22 as a memory unit.

As necessary, the turbulence prediction system 1 can also further include a terminal 3, a transmitting/receiving apparatus 4, an aircraft 5, and a network 6. The central processing unit 21 as the calculation unit of the turbulence prediction apparatus 2 carries out calculation processing and other instructions, and the storage device 22 as the memory unit stores data that is necessary for turbulence prediction. The turbulence prediction apparatus 2 can also be configured to include an output device 23 such as a display or a printer, and a communication device 24. The communication device 24 is connected to the transmitting/receiving apparatus 4 such as an antenna, and the network 6. A configuration can be adopted in which the terminal 3 is a part of the turbulence prediction apparatus 2, and a configuration can also be adopted in which the terminal 3 and the transmitting/receiving apparatus 4 are a part of the turbulence prediction apparatus 2. The turbulence prediction apparatus 2 is controlled by the terminal 3. The turbulence prediction apparatus 2 may be configured as a personal computer, while on the other hand, a configuration may be adopted in which the turbulence prediction apparatus 2 is configured as a mainframe, and the terminal 3 is connected thereto as a client. The output device 23 of the turbulence prediction apparatus 2 can be configured as the terminal 3. The storage device 22, the output device 23, and the communication device 24 of the turbulence prediction apparatus 2 can each be configured as either an internal device or an external device. The output of the turbulence prediction apparatus 2 is a turbulence occurrence probability calculated by the central processing unit 21 of the turbulence prediction apparatus 2 that is described later.

The turbulence prediction apparatus 2 of the turbulence prediction system 1 may be configured to include turbulence prediction apparatuses 2a and 2b as a plurality of turbulence prediction apparatuses. Each of the turbulence prediction apparatuses 2a and 2b is the turbulence prediction apparatus 2, and the configuration of each of the turbulence prediction apparatuses 2a and 2b is as described above. The turbulence prediction apparatuses 2a and 2b are each configured as a mainframe, and terminals 3a and 3b are connected to the turbulence prediction apparatuses 2a and 2b. The turbulence prediction apparatuses 2a and 2b may be connected to the network 6. A terminal 3c is connected as a client to the network 6, and is connected to either of the turbulence prediction apparatuses 2a and 2b that is a mainframe through the network 6. However, the terminal 3c can also be configured as a turbulence prediction apparatus 2c, instead of as a client of the turbulence prediction apparatuses 2a and 2b. The turbulence prediction apparatuses 2a and 2b can be connected to transmitting/receiving apparatuses 4a and 4b, respectively. The aircraft 5 can communicate with the transmitting/receiving apparatuses 4a and 4b. For example, the output of the turbulence prediction apparatus 2a can, as a matter of course, be output to the terminal 3a that is the output device 23 in the vicinity of the turbulence prediction apparatus 2a, and can also be output to the terminal 3c that is at a remote location, or to the aircraft 5 via the transmitting/receiving apparatus 4a.

The turbulence prediction system 1 can also be configured as a cloud computing system. In this case, as depicted in Fig. 2C, a form is not adopted in which the memory unit and the calculation unit are provided in a single turbulence prediction apparatus 2, and instead any form can be adopted as long as the memory unit and the calculation unit are configured so as to be defined within a cloud 7. That is, it is not necessary for an calculation unit serving as a calculation unit in the central processing unit 21, and the storage device 22 serving as a memory unit to be provided inside the turbulence prediction apparatus 2. Typically, the turbulence prediction system 1 is, for example, a cloud computing system that is connected to the cloud 7 to which a calculation unit and a memory unit are each connected through a network. Further, the turbulence prediction system 1 typically includes the terminal 3 that is connected to the cloud 7, and the output of the turbulence prediction system 1 is transmitted to the terminal 3. In the case of a cloud computing system also, a configuration can be adopted in which the transmitting/receiving apparatus 4 that is capable of conducting communication with the aircraft 5 is connected to the cloud 7, so that it is possible to provide the output of the turbulence prediction system 1 to the aircraft 5.

### (Prediction area, wide areas, and divided sections)

Here, with reference to Fig. 2D, the concept of a prediction area X, a wide area Y, and divided sections Z for performing data conversion with respect to meteorological data in a prediction area in which the occurrence of turbulence is to be predicted in the turbulence prediction system 1 will be described. The turbulence prediction system 1 is an apparatus for predicting turbulence in a prediction area X as depicted in Fig. 2D. The prediction area X can be selected as an arbitrary area for which meteorological data regarding an arbitrary meteorological parameter such as wind speed, and data regarding the presence of absence of turbulence occurrence at the same time point can be acquired. As will be described later, as long as meteorological data regarding an arbitrary meteorological parameter and data regarding the presence of absence of the turbulence occurrence at the same time point can be acquired, an arbitrary area anywhere in the world can be freely selected as the prediction area X. For example, in Fig. 2D, the Japanese archipelago and the vicinity thereof are assumed as the prediction area X. In the turbulence prediction system 1, the prediction area X is equally divided into a plurality of wide areas Y. The prediction area X can be equally divided so that one wide area Y is a desired arbitrary size suitable for data analysis. For example, the wide area Y can be defined as a square in which each side is 320 kilometers. However, the wide area Y is not restricted to this size, and the size can be freely selected. Furthermore, the plurality of wide areas Y are each equally divided into a plurality of divided sections Z. Each wide area Y can be equally divided so that the size of one divided section Z is a desired arbitrary size suitable for data analysis. In the case of making a determination regarding similarity using image data as described in the aforementioned turbulence prediction pattern principles, when the prediction area X or the plurality of wide areas Y is captured as an image, the divided section Z corresponds to one pixel in the image. That is, a value assigned to one divided section Z corresponds to the value of the divided section as a pixel constituting the prediction area X or the plurality of wide areas Y. For example, the wide area Y can be set as a square with sides of 5 kilometers, and can be equally divided so that one side is divided into 64 sections. However, the wide area Y is not limited to this size, and the size can be freely selected. Preferably the number of divided sections and the positions of the respective divided sections are selected in a manner such it is easy to digitize and assign meteorological data to the respective divided sections. In other words, the entire area of the prediction area X is divided so as to be composed of a plurality of divided sections Z. Then, a comparison area Y' can be freely selected within the range of the prediction area X so that an area of the same size as the size of the wide area Y has the divided sections Z which the wide area Y has. Thus, it is possible to compare the wide area Y and the comparison area Y'. At such time, the phrase "compare the wide area Y and the comparison area Y'" means that the divided sections Z of the wide area Y and the comparison area Y' are compared with each other. The wide area Y is an area that is defined in a convenient manner in order to equally compare the comparison area Y' with the whole area of the prediction area X, and the essential purpose of the wide area Y is for comparing divided sections Z constituting the comparison area Y' with all of the divided sections Z constituting the prediction area X. Data obtained by discretization and digitization of an arbitrary meteorological parameter (for example, wind speed) is assigned to the plurality of divided sections Z. Hereunder, in discrete meteorological parameter data, turbulence data, turbulence prediction pattern data, and determination-purposed meteorological data, the aforementioned prediction area X, the plurality of wide areas Y obtained by dividing the prediction area X, the wide area Y, the comparison area Y', and the divided sections Z that were divided are used as concepts of a defined data area. As will be described later, in the turbulence prediction system 1, there is a learning process that makes teacher data, and a determination process for predicting the occurrence of turbulence, and the divided sections Z must be common between the learning process and the determination process. In the learning process and the determination process, it is necessary for the wide area Y and the comparison area Y' to be selected so as to have a common predetermined size, and to be set so as to each have divided sections Z that were divided according to a common rule.

### (Time of data used in turbulence prediction system)

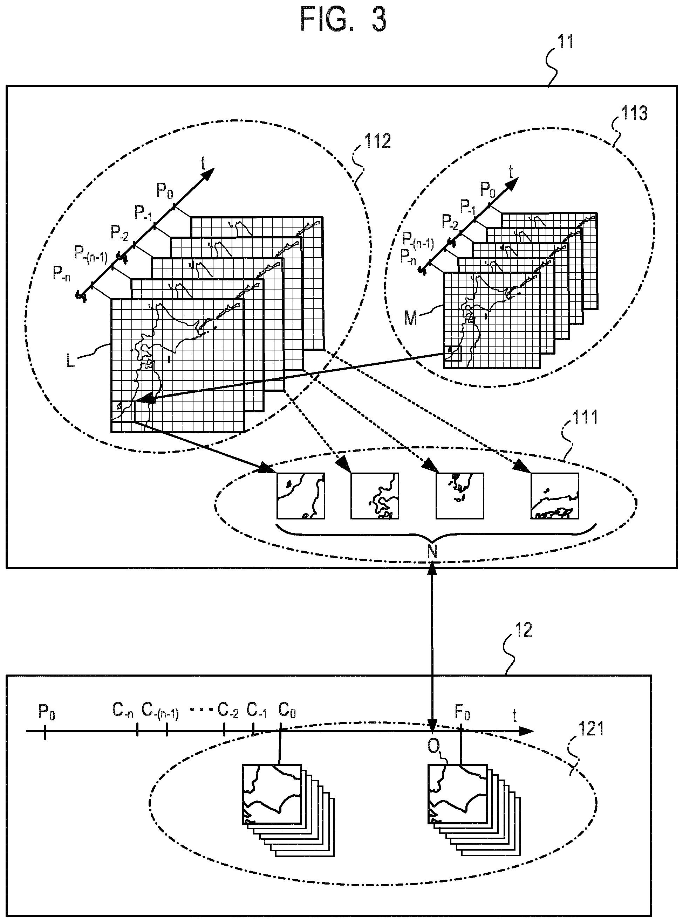

Next, with reference to Fig. 3, a function and a method for predicting the occurrence of turbulence in the turbulence prediction system 1 will be described. Fig. 3 is a drawing depicting the concept of predicting the occurrence of turbulence. First, with reference to Fig. 3, the concept of time that is used for predicting the occurrence of turbulence in the turbulence prediction system 1 will be described. The current time is represented by C₀, an arbitrary time in the future relative to C₀ is represented by F₀, and an arbitrary time in the past relative to C₀ is represented by P₀. Further, P₋₁ represents a consecutive time point which is in the past relative to P₀ and which precedes the time point P₀ by the amount of a predetermined time unit. P₋₂...P₋₍ₙ₋₁₎, P₋ₙ represent discrete times in the past relative to P₋₁ that are selected so that the respective time intervals therebetween become a uniform predetermined time unit that is the same as the time interval between P₀ and P₋₁. The predetermined time can be arbitrarily determined as a time interval that is effective for predicting the occurrence of turbulence, for example, 10 minutes, 30 minutes, 1 hour or the like. The term "predetermined number n of consecutive time points" refers to the respective time points of meteorological data at an arbitrary time point (hereinafter, "t = 0 hours"), meteorological data at a time point that is (a predetermined time unit ×1) prior to the arbitrary time point (hereinafter, "t = -1 hour"), meteorological data at a time point that is (a predetermined time unit ×2) prior to the arbitrary time point (hereinafter, "t = -2 hours"), meteorological data at a time point that is (a predetermined time unit ×3) prior to the arbitrary time point (hereinafter, "t = -3 hours"), ... and meteorological data at a time point that is (a predetermined time unit ×n) prior to the arbitrary time point (hereinafter, "t = - n hours"). For example, if the time unit of the predetermined time is determined as being 1 hour, the phrase "predetermined number n of consecutive time points" means the following discrete times: an arbitrary time (t = 0 hours), one hour prior to the arbitrary time (t = -1 hour), two hours prior to the arbitrary time (t = -2 hours), and three hours prior to the arbitrary time (t = -3 hours). Further, if the predetermined number of time points is taken as four time points, current time points (C₀, C₋₁, C₋₂, C₋₃) and past time points (P₀, P₋₁, P₋₂, P₋₃) are selected. The predetermined time interval may be set to be the same as the sampling time of the meteorological data that is obtained, or may be a longer time than the sampling time of the meteorological data that is obtained. Similarly, C₋₁ represents a discrete time that is a predetermined time unit in the past relative to C₀. As the predetermined time unit in this case, a predetermined time unit that is the same as the time interval between P₋₁ and P₀ is selected. C₋₂... C₋₍ₙ₋₁₎, and C₋ₙ represent times that are further in the past than C₋₁ and for which the respective time intervals therebetween are selected so as to be a predetermined time unit that is the same as the time interval between C₀ and C₋₁.

### (Turbulence prediction process)

Next, with reference to Fig. 3, the concept of the process for predicting turbulence in the turbulence prediction system 1 will be explained. As described above, the turbulence prediction system 1 includes a calculation unit and a memory unit. The calculation unit executes processing for a learning process 11, and processing for a determination process 12. A turbulence prediction pattern data constellation 111 including a plurality of turbulence prediction pattern data N is stored in the memory unit. The turbulence prediction pattern data N is teacher data made in the learning process 11, and is used in determining the occurrence of turbulence in the determination process 12. The turbulence prediction pattern data N corresponds to the aforementioned comparison area Y'.

### (Learning process)

First, the turbulence prediction pattern data constellation 111 and processing in a process for making the turbulence prediction pattern data constellation 111 that is performed by the calculation unit in the learning process 11 will be described. As preparation for determining the occurrence of turbulence, the turbulence prediction pattern data N constituting the turbulence prediction pattern data constellation 111 is made in advance using data for an arbitrary time in the past, separately to the process for determining the occurrence of turbulence. Each turbulence prediction pattern data N of the turbulence prediction pattern data constellation 111 is made in the following manner through calculation of discrete meteorological parameter data L of a discrete meteorological parameter data constellation 112.

First, data of one or more arbitrary meteorological parameters is selected, and the turbulence prediction pattern data constellation 111 and the discrete meteorological parameter data constellation 112 are made. The arbitrary meteorological parameters are, for example, wind speed, wind shear, air temperature, air temperature gradient, air density, air density gradient, infrared radiance temperature, cloud imagery ascertained with visible images or water vapor images or the like, and relative humidity. One kind of these arbitrary meteorological parameters may be selected, or a plurality of kinds may be combined and selected. Meteorological data at arbitrary past times P₀, P₋₁, P₋₂... P₋₍ₙ₋₁₎, P₋ₙ is acquired regarding the selected one or more arbitrary meteorological parameters. For example, in a case where wind speed is selected as a meteorological parameter, the values of the wind speed at the past times P₀, P₋₁, P₋₂ ...P₋₍ₙ₋₁₎, P₋ₙ are acquired as the meteorological data, and in a case where wind speed and wind shear are selected as meteorological parameters, the values of the wind speed and the values of the wind shear at the past times P₀, P₋₁, P₋₂...P₋₍ₙ₋₁₎, P₋ₙ are acquired as the meteorological data. In order to acquire as large an amount of meteorological data as possible, as long a time period as possible is selected as the past time period. The meteorological data is not particularly limited as long as the meteorological data is data having high reliability with respect to the meteorological parameters, such as data provided by the Japan Meteorological Agency.

These values as meteorological data are defined and acquired as follows. First, the prediction area is selected. The selected prediction area is divided into a plurality of wide areas, and each wide area is divided into divided sections constituting the relevant wide area. The prediction area may also be directly divided into divided sections. These divisions are as described above with reference to Fig. 2D. The prediction area and the wide area can be freely selected according to the obtained meteorological data and the area where it is desired to predict turbulence. For example, an area to be a major classification that is wide to a certain extent, such as the whole of Japan or a part of Japan can be arbitrarily selected as a prediction area. Then, an area as a middle classification constituting the prediction area can be selected as a wide area. In the case of the example depicted in Fig. 3, eastern Japan that includes the Kanto region, the Tohoku region and Hokkaido are selected as a wide area. The wide area is divided into a plurality of divided sections. In this way, meteorological data for arbitrary past discrete time points P₀, P₋₁, P₋₂...P₋₍ₙ₋₁₎, P₋ₙ, is acquired for the wide area that was divided into a plurality of divided sections. This process is executed with respect to the whole prediction area. The meteorological data obtained at each time point is then digitized and assigned to each of the divided sections. For an arbitrary past discrete time point P₀, with respect to an arbitrary meteorological parameter, discrete meteorological parameter data L is made by digitizing and assigning meteorological data for each wide area that was divided into a plurality of divided sections. Discrete meteorological parameter data L is also made in a similar manner for each time point of the other arbitrary past time points P₋₁, P₋₂...P₋₍ₙ₋₁₎, P₋ₙ, and a data constellation of the made discrete meteorological parameter data L is defined as a discrete meteorological parameter data constellation 112. The obtained discrete meteorological parameter data constellation 112 is typically stored in the memory unit of the turbulence prediction system 1.

Separately to the process for making the discrete meteorological parameter data constellation 112, a turbulence data constellation 113 including turbulence data M regarding whether or not turbulence occurred is acquired for the wide area that was divided into a plurality of divided sections. The wide area with respect to the turbulence data constellation 113 is the same as the wide area selected when making the discrete meteorological parameter data constellation 112, or is selected as a wide area that includes a common area. Further, the plurality of divided sections that are divided from the wide area when making the discrete meteorological parameter data constellation 112 are selected as the same divided sections as the respective divided sections used when making the discrete meteorological parameter data constellation 112. The turbulence data constellation 113 of a data constellation including the turbulence data M is then acquired with respect to arbitrary past discrete time points P₀, P₋₁, P₋₂...P₋₍ₙ₋₁₎, P₋ₙ that are the same as the arbitrary past discrete time points P₀, P₋₁, P₋₂...P₋₍ₙ₋₁₎, P₋ₙ selected when making the discrete meteorological parameter data constellation 112. The turbulence data M is data indicating the presence or absence of turbulence for each wide area that was divided into a plurality of divided sections, with respect to the turbulence data M at the arbitrary past discrete time points P₀, P₋₁, P₋₂...P₋₍ₙ₋₁₎ , P₋ₙ. The turbulence data M is observation data that includes the presence or absence of turbulence occurrence that was observed by aircraft in the past, and for example is data provided by the Japan Meteorological Business Support Center.

Then, in each turbulence data M constituting the turbulence data constellation 113, in a case where, among the plurality of divided sections that were divided from the wide area, there is a divided section where turbulence occurred at the same time point as any past discrete time point, the divided section where turbulence occurred and divided sections located at positions which contact and surround the divided section where turbulence occurred are defined as a turbulence occurrence area data section. The numerical value "1" as a numerical value indicating the occurrence of turbulence is assigned to the divided section where turbulence occurred, "0" as a numerical value indicating that turbulence has not occurred is assigned to the other divided sections where turbulence has not occurred, and the divided section to which "1" is assigned and the divided section regions to which "0" is assigned that surround the divided section may be together defined as a turbulence occurrence area data section. Then, the discrete meteorological parameter data L of the discrete meteorological parameter data constellation 112 of divided sections corresponding to each of the turbulence occurrence area data sections is extracted, and defined as turbulence prediction pattern data N. For example, in the example depicted in Fig. 3, in the turbulence data constellation 113 for the wide area at P₋ₙ, in a case where there is a divided section where turbulence occurred southeast of Sado Island, the divided section is defined as a divided section where turbulence occurred and is assigned the value "1". The value "0" is assigned to the divided sections other than the divided section where turbulence occurred.

Then, the divided sections belonging to the region centering on the divided section to which "1" was assigned are defined as a turbulence occurrence area data section. The turbulence occurrence area data section corresponds to the comparison area Y' in the foregoing description referring to Fig. 2D. That is, the turbulence occurrence area data section is a comparison area Y' selected so as to have the area where turbulence occurred as its center and the divided sections where turbulence did not occur which surround and are centered on the divided section where turbulence occurred. The turbulence occurrence area data section is the size of turbulence prediction pattern data N that is teacher data which will be described next. In the turbulence prediction system 1, as will be described later, because determination-purposed meteorological data O and teacher-data turbulence prediction pattern data N are compared, the sizes of a turbulence occurrence area data section that is a comparison area Y' and the turbulence prediction pattern data N are selected so as to be a predetermined size so as to be a size that is common with the determination-purposed meteorological data O to be described later.

Then, the discrete meteorological parameter data constellation 112 at P₋ₙ of a portion of the divided sections corresponding to the turbulence occurrence area data section is extracted, and defined as the turbulence prediction pattern data N. At the other past discrete time points P₋₁, P₋₂...P₋₍ₙ₋₁₎, P₋ₙ also, the turbulence prediction pattern data N is similarly acquired and defined. A data constellation of the turbulence prediction pattern data N is defined as the turbulence prediction pattern data constellation 111, and stored in the memory unit of the turbulence prediction system 1. Preferably, the turbulence prediction pattern data constellation 111 is updated at intervals of a predetermined time period and stored in the memory unit. It can be said the obtained turbulence prediction pattern data constellation 111 represents past data regarding the behavior of the selected arbitrary meteorological parameter in the vicinity of a location where turbulence occurred. That is, the turbulence prediction pattern data constellation 111 can be said to be a characteristic pattern showing the behavior of a meteorological parameter with respect to which there is a high possibility of turbulence occurring. By setting the period of P₀, P₋₁, P₋₂...P₋₍ₙ₋₁₎, P₋ₙ to a long period, a turbulence prediction pattern data constellation 111 composed of a large quantity of turbulence prediction pattern data N over a long period in the past can be prepared, and the accuracy of predicting the occurrence of turbulence can be increased.

### (Determination process)

Next, having described the learning process 11 in the above description, the determination process 12 will now be described. In the determination process 12, determination-purposed meteorological data O for an area of the same size as the predetermined size selected when making the turbulence prediction pattern data N in the learning process 11 is used. As described above, the determination-purposed meteorological data O has the divided sections that were divided when making the turbulence prediction pattern data N. Further, with regard to the meteorological parameter(s), it is necessary to select the same meteorological parameter(s) as the meteorological parameter(s) selected when making the turbulence prediction pattern data N in the learning process 11. That is, in a case where wind speed and wind shear were selected as meteorological parameters as the discrete meteorological parameter data L in the learning process 11, wind speed and wind shear must be selected as the meteorological parameters in the determination process 12 also. It is generally preferable that the wide area in the determination process 12 is the same wide area as the wide area used in the learning process 11. Generally, the determination-purposed meteorological data O is selected as an area having the same predetermined size as the turbulence prediction pattern data N constituting the turbulence prediction pattern data constellation 111. That is, in the case of the foregoing example described with reference to Fig. 2D, the determination-purposed meteorological data O corresponds to the wide area Y, and the turbulence prediction pattern data N corresponds to the comparison area Y'. Even if the determination-purposed meteorological data O and the turbulence prediction pattern data N are not the same size, it is necessary that at least the determination-purposed meteorological data O is for a region having an area larger than the turbulence prediction pattern data N constituting the turbulence prediction pattern data constellation 111.

In the determination process 12, determination-purposed meteorological data O is calculated and used. In the case of the determination-purposed meteorological data O, a large quantity of determination-purposed meteorological data O is made so as to correspond to wide areas over the whole of the prediction area X that is described above with reference to Fig. 2D, and arranged as a determination-purposed meteorological data constellation 121. According to one example, the determination-purposed meteorological data O is, for example, weather predict data at an arbitrary future time point F₀ which is in the future relative to a current time point C₀, and which is predicted at the current time point C₀. By a similar method to the method for making the discrete meteorological parameter data L based on weather predict data predicted at the arbitrary future time point F₀, determination-purposed meteorological data O is made by acquiring meteorological data for a wide area relating to the meteorological parameter, and digitizing and assigning the meteorological parameter in each of the divided sections constituting the wide area. Because the determination-purposed meteorological data O made based on weather predict data regarding the meteorological parameter at the arbitrary future time point F₀ is a weather predict for the wide area, a determination with respect to prediction of future turbulence is possible using the determination-purposed meteorological data O as it is. In addition, a plurality of meteorological parameters can be used in order to increase the accuracy of the determination with respect to the prediction of turbulence. In the case of using a plurality of meteorological parameters, it suffices to, for each of the plurality of meteorological parameters, make determination-purposed meteorological data O in the same manner as when making the determination-purposed meteorological data O that is described in the foregoing example of one meteorological parameter, and combine the made data into one set in a predetermined arrangement to obtain combined determination-purposed meteorological data O'. The combined determination-purposed meteorological data O' is also a plurality of weather predicts for a wide area that is made based on weather predict data for a plurality of meteorological parameters at the arbitrary future time point F₀. For each of the plurality of meteorological parameters, it suffices to make determination-purposed meteorological data O in the same manner as when making the determination-purposed meteorological data O that is described in the foregoing example of one meteorological parameter, and combine the made data into one set in a predetermined arrangement to obtain the combined determination-purposed meteorological data O'. In a case where the combined determination-purposed meteorological data O' is made using a plurality of meteorological parameters, when making the turbulence prediction pattern data N also, it is necessary to make combined turbulence prediction pattern data N as teacher data in advance by selecting a plurality of meteorological parameters that is the exact same as the plurality of meteorological parameters used when making the combined determination-purposed meteorological data O', making turbulence prediction pattern data N for each of the plurality of meteorological parameters, and combining each of the made turbulence prediction pattern data N into one set in the same predetermined arrangement as in the case of making the combined determination-purposed meteorological data O'.

According to another example, the determination-purposed meteorological data O is, for example, acquired based on meteorological data at the current time point C₀ and the most recent consecutive time points C₋₁, C₋₂...C₋₍ₙ₋₁₎, C₋ₙ sampled at predetermined discrete intervals toward the past from that time point. The number n of the most recent consecutive time points can be arbitrarily selected. Further, the discrete interval between each of the time points C₀, C₋₁, C₋₂...C₋₍ₙ₋₁₎, C₋ₙ is kept at a time interval that is a predetermined time unit. The predetermined time unit is the same as the time unit selected when making the discrete meteorological parameter data L. For example, if four time points including the current time point are adopted, it means that the determination-purposed meteorological data O is acquired by using meteorological data at the time points C₀, C₋₁, C₋₂, and C₋₃. For the respective pieces of meteorological data at the respective time points C₀, C₋₁, C₋₂, and C₋₃, by using a similar method as the method for making the discrete meteorological parameter data L, determination-purposed meteorological data O is made by acquiring meteorological data of a wide area relating to the meteorological parameter, and performing digitization and assignment with respect to the meteorological parameter in the respective divided sections constituting the wide area. Note that, the term "current time point C₀" does not mean the current time in the strictest sense, but instead means the newest time point with respect to which meteorological data necessary for making determination-purposed meteorological data O for making a determination can be utilized. When making determination-purposed meteorological data O using the most recent consecutive time points C₀, C₋₂, C-₂...C₋₍ₙ₋₁₎, and C₋ₙ, for example, in the case of making determination-purposed meteorological data O based on each of the meteorological data at the respective time points of C₀, C₋₁, C₋₂, and C₋₃, a plurality of sets of determination-purposed meteorological data O will be made. Therefore, in this case, the plurality of sets of determination-purposed meteorological data O are combined into one in a predetermined arrangement to obtain one set of combined determination-purposed meteorological data O'. This point is similar to the case of making one set of combined determination-purposed meteorological data O' for a plurality of meteorological parameters. In the case of making the combined determination-purposed meteorological data O' based on meteorological data at a plurality of time points in this manner also, when making the turbulence prediction pattern data N, similarly to when making the combined determination-purposed meteorological data O', it is necessary to make combined turbulence prediction pattern data N as teacher data in advance by making turbulence prediction pattern data N based on meteorological data at a consecutive plurality of time points, and combining each of the made turbulence prediction pattern data N into one set in the same predetermined arrangement as in the case of making the combined determination-purposed meteorological data O'.

In the determination process 12, the calculation unit calculates the degree of similarity between the determination-purposed meteorological data O, and the turbulence prediction pattern data N included in the turbulence prediction pattern data constellation 111. In a case where the determination-purposed meteorological data O is made based on weather predict data at an arbitrary future time point F₀ from the time point C₀, the degree of similarity between the determination-purposed meteorological data O and the plurality of turbulence prediction pattern data N included in the turbulence prediction pattern data constellation 111 represents the possibility of a weather pattern in which turbulence occurs existing at the future time point F₀. In a case where the determination-purposed meteorological data O is made based on meteorological data at the most recent consecutive time points taking C₀ as a reference, the degree of similarity between the determination-purposed meteorological data O and the plurality of turbulence prediction pattern data N included in the turbulence prediction pattern data constellation 111 represents the possibility, up to the current time point C₀, of a weather pattern in which turbulence occurs existing and developing. That is, the degree of similarity between the determination-purposed meteorological data O and the turbulence prediction pattern data N indicates the extent to which there is a possibility that turbulence will occur. In this way, the degree of possibility of turbulence occurring can be calculated based on the degree of similarity between the determination-purposed meteorological data O and the turbulence prediction pattern data N.

Calculation of the degree of similarity between the determination-purposed meteorological data O and the turbulence prediction pattern data N is performed by a comparison between the turbulence prediction pattern data N included in the turbulence prediction pattern data constellation 111 and the determination-purposed meteorological data O for the whole prediction area. Specifically, for each of a plurality of pieces of determination-purposed meteorological data O corresponding to the whole prediction area, the divided sections constituting the determination-purposed meteorological data O and the divided sections of all of the turbulence prediction pattern data N included in the turbulence prediction pattern data constellation 111 are compared. In this comparison, the divided sections constituting the determination-purposed meteorological data O and the divided sections constituting the turbulence prediction pattern data N are shifted one section at a time and compared. The comparison at this time is executed so as to capture the determination-purposed meteorological data O and the turbulence prediction pattern data N, respectively, as image data, and for each image, to compare the values of the divided sections corresponding to the pixels of the image. If there is a divided section that is similar to the turbulence prediction pattern data N in certain determination-purposed meteorological data O of the determination-purposed meteorological data constellation 121, it means that the possibility that turbulence will occur in the area corresponding to the relevant divided section is high. In addition, in a case where the degree of similarity with a plurality of pieces of turbulence prediction pattern data N in the turbulence prediction pattern data constellation 111 is high in divided sections around a certain area, it means that the possibility of turbulence occurring is particularly high. Here, the term "degree of similarity" simply means the degree of similarity between numerical values of meteorological data assigned to the respective divided sections of the turbulence prediction pattern data N as well as the distribution of the numerical values in the divided sections, and numerical values of meteorological data assigned to the respective divided sections of the determination-purposed meteorological data O as well as the distribution of the numerical values in the divided sections. Regional attributes of the original meteorological data of the turbulence prediction pattern data N are not taken into consideration. That is, even if certain turbulence prediction pattern data N is data made centering on an area where turbulence occurred that is a certain region of Hokkaido, and the determination-purposed meteorological data O is data for the Kyushu region, if a degree of similarity is recognized between divided sections constituting each of these data, it can be predicted that turbulence will occur in an area where the degree of similarity with the determination-purposed meteorological data O of the Kyushu region is high. In addition, the turbulence prediction pattern data N included in the turbulence prediction pattern data constellation 111 can be classified into a certain amount of categories based on the arrangement and tendency of the numerical values of meteorological parameters of the divided sections. Among those categories, a category in which a large quantity of turbulence prediction pattern data N is included, and a category in which a small quantity of turbulence prediction pattern data N is included appear. At such time, when performing calculation of the degree of similarity between the determination-purposed meteorological data O and the turbulence prediction pattern data N, the degree of similarity may be calculated in a manner so that in a case where turbulence prediction pattern data N of a category which includes a large quantity of turbulence prediction pattern data N is included in the determination-purposed meteorological data O, a large weighting is assigned to the frequency with respect to that data, and in a case where turbulence prediction pattern data N of a category which includes a small quantity of turbulence prediction pattern data N is included in the determination-purposed meteorological data O, a small weighting is assigned to the frequency with respect to that data. This degree of similarity corresponds to an area where turbulence occurs, and the degree of possibility that turbulence will occur. Various methods can be adopted to calculate the degree of similarity.

Further, calculation of the degree of similarity between the determination-purposed meteorological data O and the turbulence prediction pattern data N can also be executed by a CNN. As the CNN, a general CNN method can of course be adopted, and various other CNN methods can also be adopted. In the CNN, for example, the turbulence prediction pattern data N included in the turbulence prediction pattern data constellation can be executed by the CNN as a convolutional layer. In the case of using deep learning such as a CNN, a characteristic feature of a similar image is output without particularly taking cognizance of the process with regard to the determination. By this means, with respect to all of the divided sections of the determination-purposed meteorological data O corresponding to all areas of the prediction area and the divided sections constituting the plurality of turbulence prediction pattern data N in the turbulence prediction pattern data constellation 111 as described above, the comparisons that have described so far can be executed in a black box-like fashion. The output by the CNN is similar determination-purposed meteorological data O that appears in the turbulence prediction pattern data N. In some cases this output may include a large quantity of turbulence prediction pattern data N, and in some cases this output may include a small quantity of turbulence prediction pattern data N. In a case where a large quantity of turbulence prediction pattern data N is included, it means that there is a high degree of possibility that turbulence will occur.

### [Embodiments]

Subsequently, it will be explained below, the turbulence prediction system 1 as an embodiment to which the embodiments explained thus far are specifically applied. First, the turbulence prediction process of Embodiment 1 by the turbulence prediction apparatus 2 will be explained.

### (Embodiment 1)

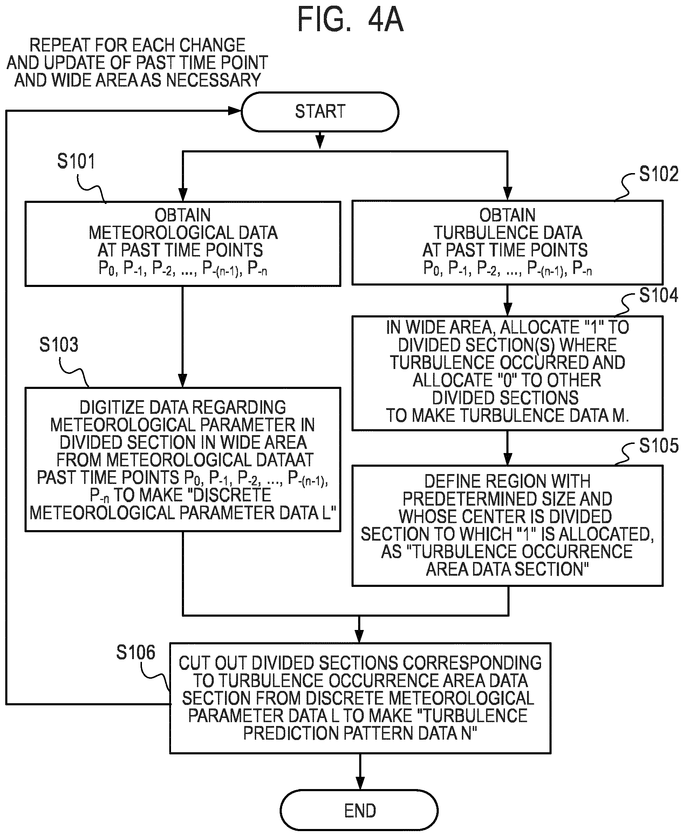

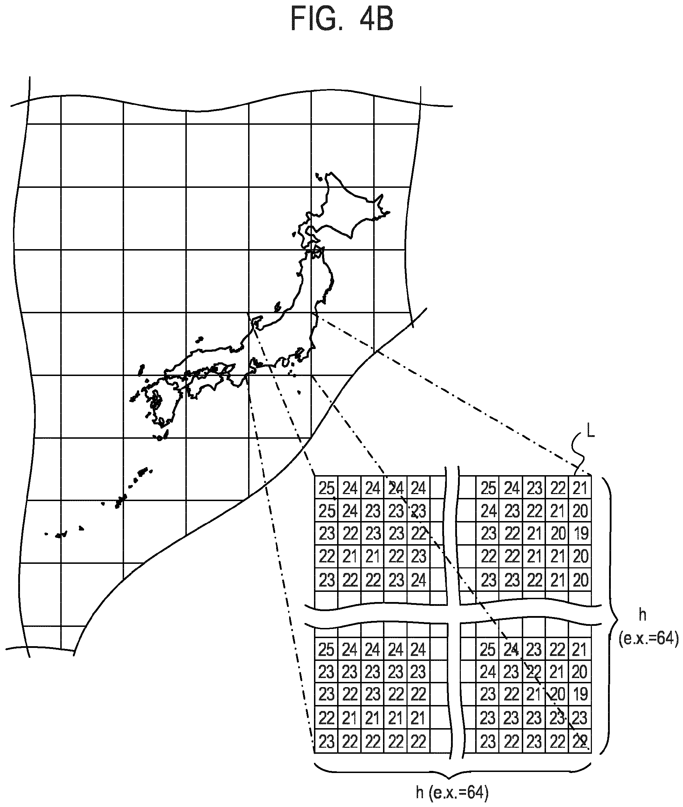

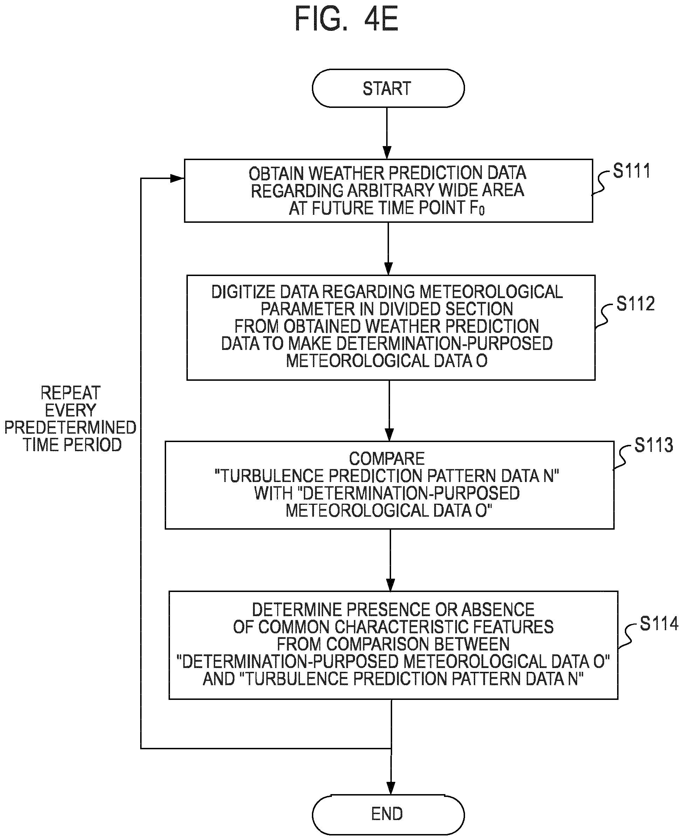

With reference to Figs. 4A to 4E, the turbulence prediction process of Embodiment 1 by the turbulence prediction system 1 based on the embodiment will be explained. Embodiment 1 corresponds to the first turbulence prediction pattern principle in the embodiment. The turbulence prediction system 1 of Embodiment 1 is performed by the calculation unit. The turbulence prediction process performed by the calculation unit includes a learning process and a determination process. Fig. 4A illustrates a flowchart of the learning process of the turbulence prediction process of Embodiment 1, and Fig. 4E illustrates a flowchart of the determination process of the turbulence prediction process of Embodiment 1. Figs. 4B to 4D are drawings depicting the concept of a process corresponding to the learning process 11 in Fig. 3, which is the process to make the turbulence prediction pattern data. It will be explained below, an example in which the turbulence prediction process is performed by the central processing unit 21 of the turbulence prediction apparatus 2, an example of the calculation unit of the turbulence prediction system. In the learning process by the turbulence prediction apparatus 2 of Embodiment 1, past meteorological data and observation data that includes the presence or absence of a past turbulence actually observed by the aircraft are used. The past observation data made by the actual observation by the aircraft include data regarding a zone where a turbulence occurred in the past. In the determination process, the weather predict data is used. The weather predict data is, for example, weather predict data that includes arbitrary meteorological parameters provided by an organization such as the Meteorological Agency and is meteorological data made by predicting future weather. As arbitrary meteorological parameters, various types of meteorological parameters can be used. These various types of meteorological parameters are herein denoted as meteorological parameters α, β, γ, .... A major example of the meteorological parameters α, β, γ, ... is as follows. This is merely a major example, and other types of meteorological parameters can be selected as the meteorological parameter α, β, γ, ...
(1) Meteorological Parameter α = Absolute Value of Vertical Wind Shear
(2) Meteorological Parameter β = Vertical Temperature Gradient
(3) Meteorological Parameter γ = Vertical Air Density Gradient
(4) Meteorological Parameter δ = Cloud Image in Satellite Photograph (infrared radiance temperature, visible image, water vapor image, etc.)

With reference to Fig. 4A, it will be explained, the creation of the turbulence prediction pattern data N as teacher data in the learning process of the turbulence prediction process of Embodiment 1. In the turbulence prediction process, a prediction area as an area for which turbulence prediction is to be made is determined. The prediction area is divided into wide areas and divided sections based on the explanation with reference to Fig. 2D. The definition of the prediction area, the wide areas, and the divided sections is the same as the definition explained above. The central processing unit 21 of the turbulence prediction apparatus 2 performs the following learning process. First, one meteorological parameter is selected from the meteorological parameters α, β, γ, and δ. As the meteorological parameter, a meteorological parameter that is known for being a factor that affects a turbulence in some manner and being effective in predicting a turbulence is selected. The meteorological parameters α, β, γ, and δ have been already known as meteorological parameters that are effective in predicting a turbulence, and therefore, any of them may be used. The selected meteorological parameter is determined as an evaluation meteorological parameter. Hereinafter, the explanation will be made on the assumption that the meteorological parameter α is focused on as the evaluation meteorological parameter. Then, past meteorological data K about the evaluation meteorological parameter in an arbitrary wide area is obtained (S101). The term "past" means a discrete time point P₀ that serves as a past reference prior to the current time point C₀. The current time point C₀, the past time point P₀, and time points P₋₁, P₋₂, ..., P₋₍ₙ₋₁₎, P₋ₙ prior to P₀ are as explained in the embodiment. That is, in this process, the past discrete time points P₀, P₋₁, P₋₂, ..., P₋₍ₙ₋₁₎, P₋ₙ got back from the discrete time point P₀ serving as the past reference in such a manner that time intervals between them are a predetermined time period are defined, and meteorological data at these past time points P₀, P₋₁, P₋₂, ..., P₋₍ₙ₋₁₎, P₋ₙ are obtained. The predetermined time period can be determined to be an arbitrary time interval that is effective in turbulence prediction, such as 10 minutes, 30 minutes, and 1 hour. The predetermined time period that serves as the time intervals between these discrete time point P₀, P₋₁, P₋₂, ..., P₋₍ₙ₋₁₎, P₋ₙ may be made the same as a sampling time of the obtained meteorological data or may be made longer than the sampling time of the obtained meteorological data.

While the process to obtain the meteorological data K (S101) is performed, turbulence data at the past time points P₀, P₋₁, P₋₂, ..., P₋₍ₙ₋₁₎, P₋ₙ that serve as references are obtained (S102). The process S101 and the process S102 may be performed one after another, simultaneously, or alternately. It is desirable to use, as the past meteorological data, past meteorological data as much as possible as long as the data is reliable, and the most up-to-date meteorological data is used.

The predetermined wide area is an arbitrary rectangular area in a mathematical meaning for calculation in the turbulence prediction process. Divided mesh elements into which this area is divided in an arbitrary number in a longitude (east-west) direction and in the arbitrary number in a latitude (north-south) direction each correspond to a divided section. For example, in the example illustrated in Fig. 4B to Fig. 4D, each arbitrary divided section can be defined as the divided section Lij (i = 1 to h, j = 1 to h), which is the ith in the east-west direction and the jth in the north-south direction. For example, h is 64. At this divided section Lij, the meteorological parameters α, β, γ, and δ are defined as αij, βij, γij, and δij (i = 1 to h, j = 1 to h), respectively.

For the meteorological data at the past discrete time points P₀, P₋₁, P₋₂, ..., P₋₍ₙ₋₁₎, P₋ₙ obtained in the previous process (S101), each arbitrary wide area is equally divided into divided sections Lij (i = 1 to h, j = 1 to h) with a predetermined size, as illustrated Fig. 4B. The wide area is typically divided into squares but may be divided into rectangles. The size of the wide area and the sizes of the divided sections are set such that the divided sections have the same size in the wide area. Then, from each of the obtained meteorological data at the past discrete time points P₀, P₋₁, P₋₂, ..., P₋₍ₙ₋₁₎, P₋ₙ, an evaluation meteorological parameter of each of the divided sections divided into is digitized and allocated to the corresponding divided section of discrete meteorological parameter data L, by which a discrete meteorological parameter data group 112 is made (S103). In the case of the present example, the absolute value of a vertical wind shear is allocated as the evaluation meteorological parameter to each divided section (each mesh element). When a wide area is regarded as one image, divided sections Lij (i = 1 to h, j = 1 to h) of which the discrete meteorological parameter data L consists each serve as a divided mesh element for calculation and each correspond to a pixel of the image. That is, digitizing and allocating the evaluation meteorological parameters to the divided sections Lij (i = 1 to h, j = 1 to h) makes two-dimensional pseudo image data in which mesh elements are digital values. Note that the pseudo image data means image data obtained not by actual capturing, and the pseudo image data is image data formed by allocating numeric values. However, the pseudo image data can be used as image data or simply as the set of numeric data on the evaluation meteorological parameters of the divided sections Lij (i = 1 to h, j = 1 to h). As the image data, for example, the numeric values of the mesh elements of the divided sections Lij (i = 1 to h, j = 1 to h) are normalized with the maximum value of the evaluation meteorological parameters of the divided sections Lij (i = 1 to h, j = 1 to h) and converted into numeric data within the range from 0 to 1, and the numeric values can be displayed as monochrome image data with a black-white two-step gradation. This operation is performed on the whole prediction area to allocate numeric values to divided sections of which the whole prediction area consists.

After the process to obtain the turbulence data at the time points P₀, P₋₁, P₋₂, ..., P₋₍ₙ₋₁₎, P₋ₙ (S102), the presence or absence of a turbulence is digitized and allocated to divided sections Lij (i = 1 to h, j = 1 to h), by which a turbulence data group 113 consisting of a plurality of pieces of turbulence data M is made. For example, the turbulence data M are made by allocating "1" to a divided section or divided sections where a turbulence occurred and allocating "0" to divided sections where no turbulence occurred (S104). Then, a quadrilateral region with the same size as a wide area and whose center is the divided section(s) to which "1" is allocated is defined as a turbulence occurrence area data section (S105). Then, divided sections at a location corresponding to the turbulence occurrence area data section are cut out from the discrete meteorological parameter data L to define turbulence prediction pattern data N (S106). The turbulence prediction pattern data N is made in this manner. Thus, the turbulence prediction pattern data N is two-dimensional data that indicates the behavior of the meteorological parameter at and around a location where a turbulence occurred at the time of the occurrence. In the case where a wide area as a major division is divided in a plurality of sub-wide areas, and divided sections Lij are obtained for each sub-wide area, the process S101 to the process S106 are repeated for the whole wide area as the major division. Outputs from the process S101 to the process S106 are stored in the memory unit of the turbulence prediction system 1 as necessary. In the case where the turbulence prediction system 1 includes the turbulence prediction apparatus 2, the outputs are stored in the storage device 22.

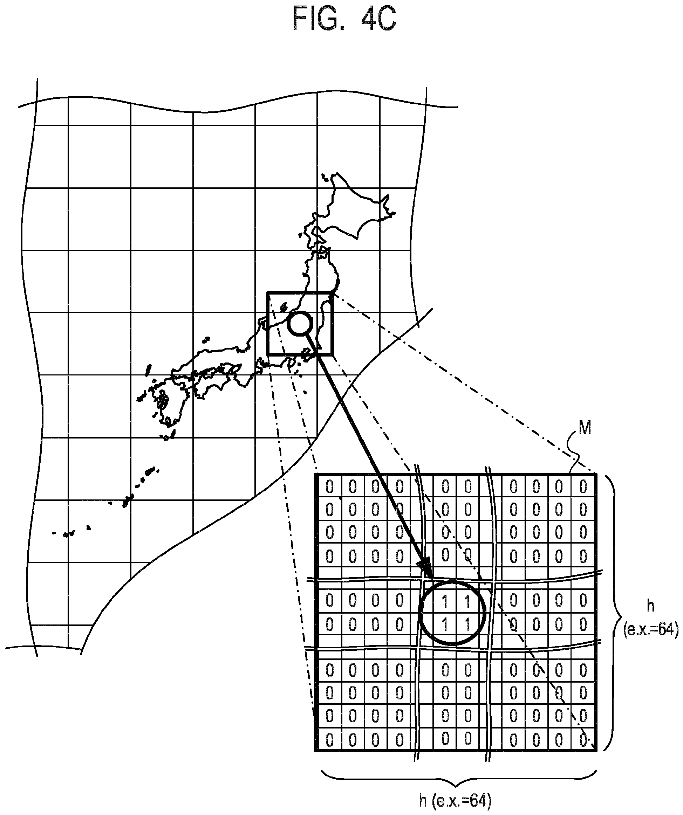

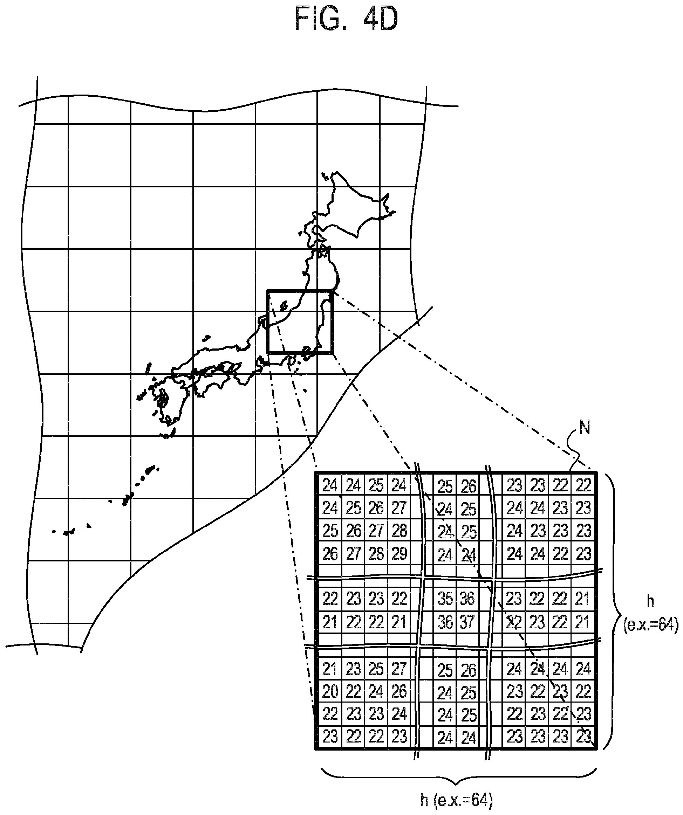

Subsequently, the processes from the process S101 of obtaining the meteorological data K to the process S106 of obtaining the turbulence prediction pattern data N explained thus far will be specifically explained with reference to Fig. 4B and Fig. 4C. Meteorological data regarding a wide area at an arbitrary time point from among the past discrete time points P₀ to P₋ₙ is obtained. For the obtained meteorological data, the absolute values of vertical wind shears as the meteorological parameter α are discretized for divided sections Lij (i = 1 to h, j = 1 to h) into which the meteorological data is equally divided, and the discretized numeric values are allocated to the divided sections Lij. This is the discrete meteorological parameter data L as in Fig. 4B. Over the whole prediction area, values of the meteorological parameter α are allocated to its divided sections. Meanwhile, turbulence data including the presence or absence of a turbulence in the prediction area at the arbitrary time point is obtained. For the divided sections of the whole prediction area, "1" is allocated to a location where a turbulence occurred, and "0" is allocated to locations where no turbulence occurred as in Fig. 4C, by which the discrete meteorological parameter data L is made. For example, in Fig. 4C, a turbulence occurred in the Hokuriku area of Japan, and the numeric value "1" is allocated to divided sections of its location, and the numeric value "0", which indicates that no turbulence occurred, is allocated to the other locations. Then, divided sections are selected to form a quadrilateral with a predetermined size, and the resultant area is determined as the turbulence occurrence area data section. Then, divided sections corresponding to the turbulence occurrence area data section are cut out from the discrete meteorological parameter data Lij (i = 1 to h, j = 1 to h). That is, when a turbulence occurred as in Fig. 4C, sections in an area with a predetermined size whose center is sections to which the numeric value "1" is allocated are cut out from the discrete meteorological parameter data and defined as the turbulence prediction pattern data N as in Fig. 4D. That is, the discrete meteorological parameter data including these divided sections indicates a local behavior of the meteorological parameter at and around the location where the turbulence occurred, thus meaning an extremely high possibility of the occurrence of a turbulence.

Subsequently, with reference to Fig. 4E, the determination process 12 of the turbulence prediction process of Embodiment 1 will be explained. The calculation unit of the turbulence prediction system 1 (the central processing unit 21 in the case where the turbulence prediction apparatus 2 is provided) obtains weather predict data regarding an arbitrary wide area (S111). The definitions of the prediction area and divided section and the definition of meteorological data are the same as explained above. The weather predict data is meteorological data regarding the meteorological parameter α at a future time point F₀ after the current time point C₀. The meteorological parameter has to be common to the learning process 11 and the determination process 12. The relationship of the future time point F₀ after the current time point C₀ is as explained in the embodiment. It will be explained below, an example in which the turbulence prediction apparatus 2 is provided as in the learning process 11. The weather predict data regarding the arbitrary wide area may be obtained, for example, from the communication device 24 or may be obtained in the form that is stored in the storage device 22 by another means.

When a discrete meteorological parameter data group 112 is made from the weather predict data obtained in the previous process (Sill) for each of all wide areas in the prediction area, a quadrilateral area with the same size as the area of the discrete meteorological parameter data L is defined as the area of the determination-purposed meteorological data O and divided sections of which the determination-purposed meteorological data O consists, and the evaluation meteorological parameter of each of the divided sections of the area is digitized (S112). Here, since the meteorological parameter α is selected as the evaluation meteorological parameter in the learning process 11 as explained above, the meteorological parameter α, that is, the absolute value of vertical wind shear in the explanation of the embodiment, is digitized. The weather predict data is preferably obtained every predetermined time period that is set as an update of the current time point C₀ and the future time point F₀, as necessary. The determination-purposed meteorological data O is stored in the memory unit of the turbulence prediction system 1, that is, the storage device 22 in the case of the turbulence prediction apparatus 2, as necessary.

The calculation unit or the central processing unit 21 reads the determination-purposed meteorological data O made by digitizing the meteorological parameter α in the previous process (S112) and the turbulence prediction pattern data N made in the learning process, from the memory unit or the storage device 22. Then, the read determination-purposed meteorological data O and the turbulence prediction pattern data N are compared together to determine the degree of similarity therebetween (S113). The calculation unit or the central processing unit 21 obtains, in each of the divided sections of the determination-purposed meteorological data O, the presence or absence of divided sections of which determination-purposed meteorological data O similar to any turbulence prediction pattern data N from among all the turbulence prediction pattern data N included in the turbulence prediction pattern data group 111 consists. That is, in the comparison, the divided sections of the determination-purposed meteorological data O include divided sections with a high degree of resemblance to those of the turbulence prediction pattern data N and divided sections with a low degree of resemblance with those of the turbulence prediction pattern data N. Therefore, the degree of resemblance is calculated as the degree of similarity for determination. As a result, a high degree of similarity of divided sections means a high possibility of the occurrence of a turbulence, and a low degree of similarity of divided sections means a low possibility of the occurrence of a turbulence. For example, when the degree of resemblance of divided sections in some wide area to any turbulence prediction pattern data N included in the turbulence prediction pattern data group 111 is higher than those of the other divided sections, it is determined that there is a high possibility of the occurrence of a turbulence in the divided sections with the degree of resemblance. For the degree of resemblance between the determination-purposed meteorological data O and the turbulence prediction pattern data N in arbitrary divided sections of the determination-purposed meteorological data O, various approaches can be selected.

For example, the determination-purposed meteorological data O is located at an arbitrary position in the turbulence prediction pattern data N, and the degree of resemblance can be determined as the magnitude of a correlation coefficient r between numeric values of the meteorological parameter between corresponding divided sections of the turbulence prediction pattern data N and the determination-purposed meteorological data O. That is, an average value is obtained for all the divided sections of the turbulence prediction pattern data N, and a deviation between the average value and a numeric value of the meteorological data at each of the divided sections of the turbulence prediction pattern data N. Meanwhile, an average value is obtained for divided sections of the determination-purposed meteorological data O at the position corresponding to the turbulence prediction pattern data N, and a deviation between the average value and a numeric value of the meteorological data at each of the divided sections of the determination-purposed meteorological data O at the position corresponding to the turbulence prediction pattern data N. From this, the correlation coefficient r that is obtained by obtaining the product of both deviations and dividing the product by the product of the square roots of sums of squares of both deviations can be determined as the degree of similarity. The approach is not necessarily binding. For example, the degree of frequency of the turbulence prediction pattern data N in the turbulence prediction pattern data group 111 included in the determination-purposed meteorological data O can be calculated as a score. The definition of the score and the method of the calculation can be freely selected, and any method can be used for the calculation. By defining the score as a rate of the degree of frequency to produce a predetermined distribution, the degree of frequency of the turbulence prediction pattern data N in the turbulence prediction pattern data group 111 included in the determination-purposed meteorological data O can be determined as a degree of possibility of the occurrence of a turbulence (S114).

In addition, in the process to determine the degree of similarity (S114), the degree of frequency of the turbulence prediction pattern data N in the turbulence prediction pattern data group 111 included in the determination-purposed meteorological data O is automatically calculated by the use of a deep learning approach by CNN, and the degree of similarity therebetween can be determined. The determination-purposed meteorological data O is a two-dimensional image whose first axis is the north-south direction and whose second axis is the east-west direction, and a three-dimensional data set in which a time axis of the determination-purposed meteorological data O that is made for each weather predict data with respect to the future time point F₀ is made. Here, the CNN is performed with all the turbulence prediction pattern data N in the turbulence prediction pattern data group 111 used as a convolution layer. A specific method of performing the CNN is based on a normal CNN approach. An output value by the CNN is specified image elements that are cut out based on past meteorological data regarding a location where a turbulence occurred. Therefore, the output value of the CNN can be used as a turbulence occurrence probability (S114).

By repeating the processes (Sill to S114) explained above every predetermined time interval to a timing to obtain weather predict data regarding the arbitrary wide area, the turbulence occurrence probability that is updated every time interval can be obtained. The timing to obtain the weather predict data can be freely set to the predetermined time interval. In the process to obtain the weather predict data (Sill), the timing to obtain the weather predict data may be freely set to the predetermined time interval, and a measure of weather predict data may be collectively obtained at once. Alternatively, the communication device 24 may obtain and store one piece of weather predict data in the storage device 22 in one communication, then the process to obtain weather predict data (Sill) may be continued without proceeding to the next process (S112) until a measure of weather predict data is accumulated, and the processes (S112 to S114) may be performed at a timing when a certain amount of weather predict data is collectively obtained. The determination process 12 includes all of these.

In the invention of the present application typified by Embodiment 1, with one meteorological parameter focused, the turbulence prediction pattern data N is made from past meteorological data regarding the time when a turbulence occurred, and meanwhile, the determination-purposed meteorological data O is made from weather predict data regarding the future time point F₀. By comparing both pieces of image data to calculate the degree of similarity, the degree of possibility of the occurrence of a turbulence can be calculated, which provides such an advantageous effect that the occurrence of a turbulence can be predicted by a simple method based on a fact/conditions of the occurrence of a past turbulence.

### (Embodiment 2)

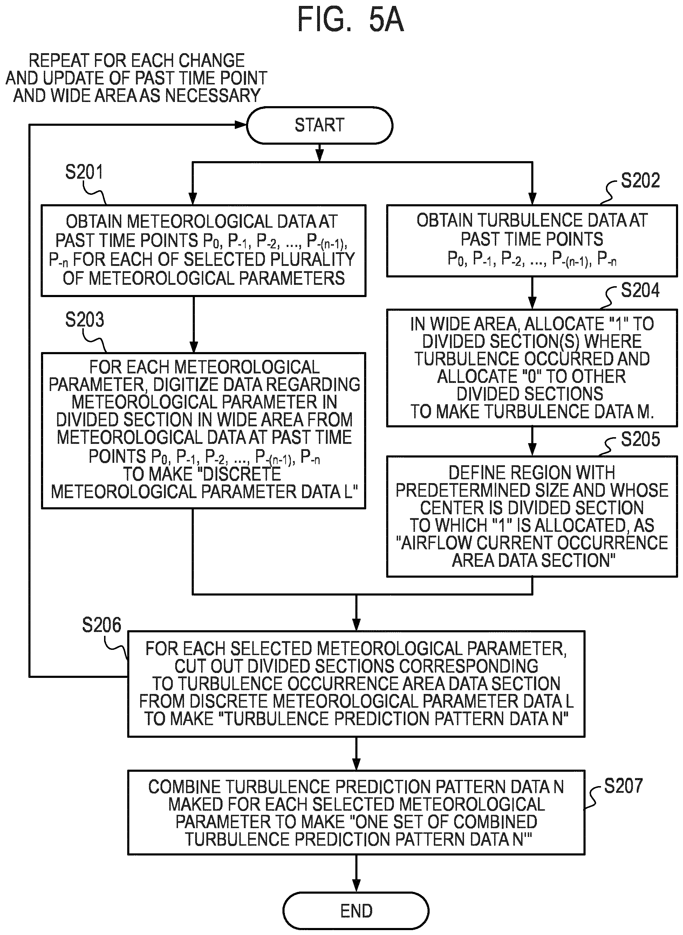

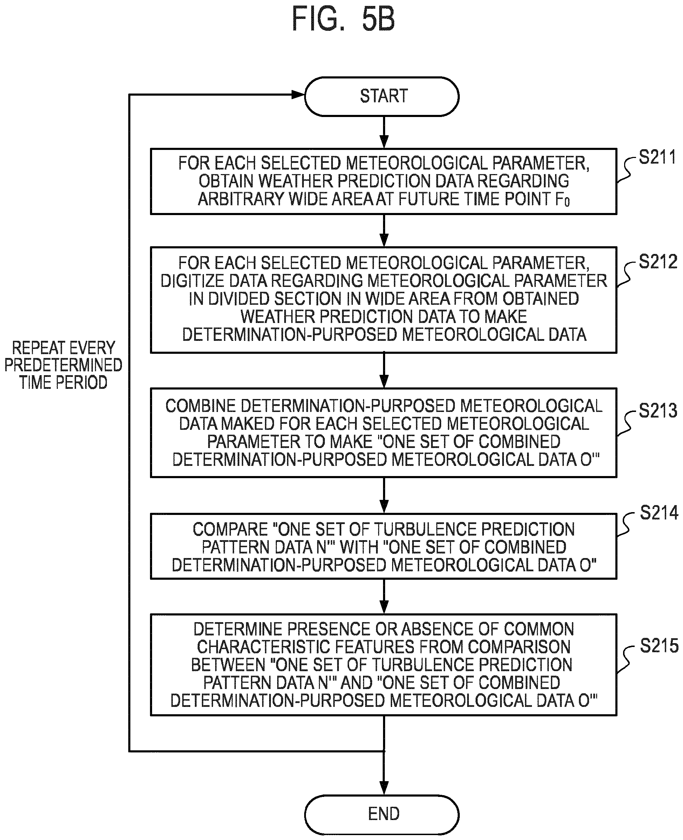

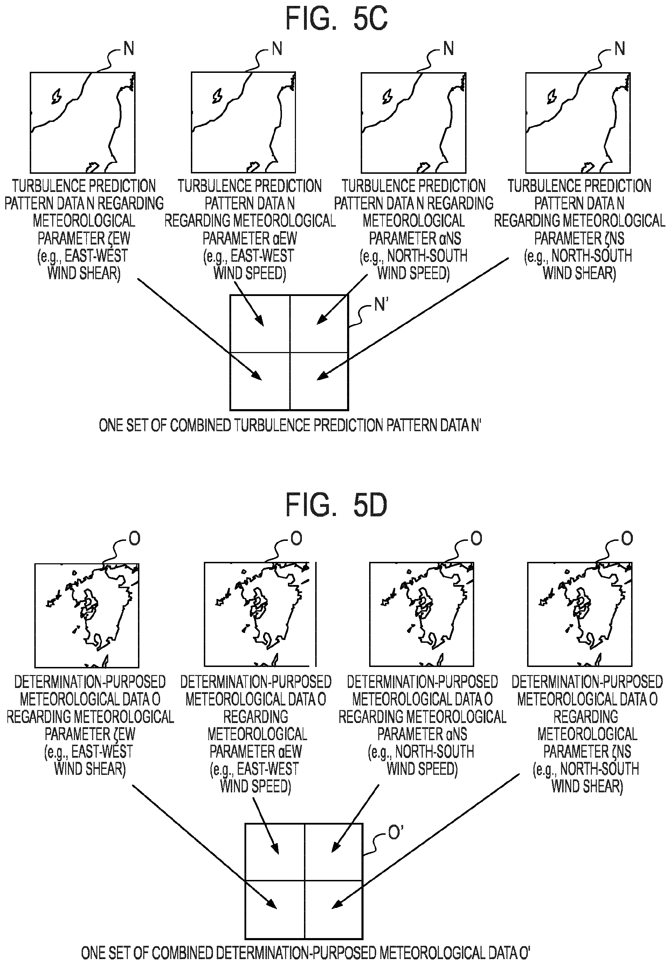

With reference to Figs. 5A to 5D, the turbulence prediction process of Embodiment 2 by the turbulence prediction system 1 will be explained. Embodiment 2 corresponds to the second turbulence prediction pattern principle in the embodiment. Also in Embodiment 2, as in Embodiment 1, the turbulence prediction process including the learning process 11 and the determination process 12 is performed. The concept of the learning process 11 and the determination process 12 is as explained in the embodiment and the same as the concept illustrated in Fig. 3. Also in Embodiment 2, as in Embodiment 1, in the learning process 11, past meteorological data and past observation data obtained by actual observation by the aircraft are used, and in the determination process 12, weather predict data is used. Embodiment 2 is different from Embodiment 1 in that, while only one meteorological parameter is selected as the evaluation meteorological parameter from among the meteorological parameters α, β, γ, ... in the learning process 11 and the determination process 12 in Embodiment 1, in Embodiment 2, a plurality of meteorological parameters α, β, γ, ... is selected as evaluation meteorological parameters and used in combination. That is, to enable prediction with higher accuracy by identifying a degree of similarity from multiple viewpoints, Embodiment 2 is an approach of increasing the amount of information to determine similarity in such a manner as to make the turbulence prediction pattern data N and the determination-purposed meteorological data O with a plurality of meteorological parameters of different types. Here, Fig. 5A illustrates a flowchart of the learning process 11 of the turbulence prediction process of Embodiment 2, and Fig. 5B illustrates a flowchart of the determination process 12 of the turbulence prediction process of Embodiment 2. Fig. 5C illustrates the concept of making turbulence prediction pattern data N regarding the evaluation meteorological parameters as one set of combined turbulence prediction pattern data N'. Fig. 5D illustrates the concept of making determination-purposed meteorological data O regarding the evaluation meteorological parameters as one set of combined determination-purposed meteorological data O'. Embodiment 2 will be explained below with the focus on differences from Embodiment 1, and the explanation of the same regards as in Embodiment 1 will be omitted. A major example of the meteorological parameters α, β, γ, ... of Embodiment 2 is as follows. This is merely a major example, and other types of meteorological parameters can be selected as the meteorological parameter α, β, γ, .... From among the following meteorological parameters α, β, γ, ..., two or more meteorological parameters are selected as the evaluation meteorological parameters and used in combination.
(1) Meteorological Parameter αEW = East-West Component of Vertical Wind Shear
(2) Meteorological Parameter αNS = North-South Component of Vertical Wind Shear
(3) Meteorological Parameter β = Vertical Temperature Gradient
(4) Meteorological Parameter γ = Vertical Air Density Gradient
(5) Meteorological Parameter δ = Cloud Image in Satellite Photograph (infrared radiance temperature, visible image, water vapor image)
(6) Meteorological Parameter ε = Relative Humidity
(7) Meteorological Parameter ζEW = East-West Component of Wind Speed
(8) Meteorological Parameter ζNS = North-South Component of Wind Speed
(9) Meteorological Parameter η = Air Temperature (Absolute Value)
(10) Meteorological Parameter θ = Air Density (Absolute Value)

As a representative example of the evaluation meteorological parameters of Embodiment 2, for example, four meteorological parameters: (1) meteorological parameter αEW (east-west component of vertical wind shear), (2) meteorological parameter αNS (north-south component of vertical wind shear), (7) meteorological parameter ζEW (east-west component of wind speed), and (8) meteorological parameter ζNS (north-south component of wind speed) are selected. Here, the case where these four meteorological parameters are selected as the evaluation meteorological parameters will be explained below by way of an example. As the selection and the combination of the meteorological parameters, the number of meteorological parameters that enables the creation of an even number of pieces of pseudo meteorological image data is selected. The even number means that the number is convenient for making quadrilateral image data when the pieces of image data are combined into one piece of image data. In this manner, Embodiment 2 is different from Embodiment 1 in that pieces of meteorological data made for the plurality of meteorological parameters are combined.

Fig. 5A is a flowchart of making one set of combined turbulence prediction pattern data N' as teacher data in the learning process 11 of the turbulence prediction process of Embodiment 2. In Embodiment 2, for each of the plurality of evaluation meteorological parameters, processes S201 to S206 (Fig. 5A), which are the same processes as the processes S101 to S106 of Embodiment 1 (Fig. 4A), are performed. The processes S201 to S206 are the same as in Embodiment 1 and the explanation thereof will be omitted. By the process 206, the turbulence prediction pattern data N is made for each of the plurality of evaluation meteorological parameters. In the case where the four meteorological parameters including the east-west component of vertical wind shear, the north-south component of vertical wind shear, the east-west component of wind speed, and the north-south component of wind speed are selected as the meteorological parameters, pieces of turbulence prediction pattern data N as the even number (four in this explanation) of pieces of two-dimensional image data are made for these meteorological parameters as in Fig. 5C.

The four pieces of turbulence prediction pattern data N corresponding to the four evaluation meteorological parameters made in the previous process (S206) are arranged and combined to make one set of combined turbulence prediction pattern data N' as the teacher data (S206). For example, as illustrated in Fig. 5C, the one set of combined turbulence prediction pattern data N' is made in such a manner as to arrange (a) the east-west component of wind speed at the top left, (b) the north-south component of wind speed at the top right, (c) the east-west component of vertical wind shear at the bottom left, and (d) the north-south component of the vertical direction at the bottom right, assuming that the completed one set of combined turbulence prediction pattern data N' is to be divided into four. The made one piece of pseudo meteorological image data is stored in the memory unit or the storage device 22, as teacher data at a predetermined time (S207). This is performed repeatedly over the whole arbitrary wide area. As in Embodiment 1, the process S201 to the process S207 are repeated for the whole arbitrary wide area as planned (fully-divided wide area). An approach of making turbulence pattern data for each of the meteorological parameters of which the one set of combined turbulence pattern data N' consists is the same as in Embodiment 1.

Subsequently, the determination process 12 of Embodiment 2 will be explained. Fig. 5B illustrates a flowchart of the determination process 12 of the turbulence prediction process of Embodiment 2. Since the teacher data is made based on the plurality of meteorological parameters in the determination process of Embodiment 2, the determination process 12 also needs to select the same meteorological parameters as those used in the learning process 11 and make the one set of combined determination-purposed meteorological data O' in the same arrangement manner as with the teacher data. This point is what Embodiment 2 is different from Embodiment 1. As to the other points, Embodiment 2 is the same as Embodiment 1. Conversely, an approach of making determination-purposed meteorological data for each of the meteorological parameters of which the one set of combined determination-purposed meteorological data O' consists is the same as in Embodiment 1.

In the determination process 12 of Embodiment 2, a process S211 to obtain the weather predict data regarding an arbitrary wide area for each of the plurality of evaluation meteorological parameters selected in the learning process 11 to a process S212 to make determination-purposed meteorological data O for each of the plurality of evaluation meteorological parameters are the same as in Embodiment 1. Therefore, the explanation thereof will be omitted. By the process 212, the determination-purposed meteorological data O is made for each of the plurality of evaluation meteorological parameters. In the explanation of the learning process 11, the four meteorological parameters including the east-west component of vertical wind shear, the north-south component of vertical wind shear, the east-west component of wind speed, and the north-south component of wind speed are selected as the meteorological parameters, and thus pieces of determination-purposed meteorological data O are made for these meteorological parameters as in Fig. 5D.

The four pieces of determination-purposed meteorological data O corresponding to the four evaluation meteorological parameters made in the previous process (S212) are arranged and combined to make one set of combined determination-purposed meteorological data O' (S213). For example, as illustrated in Fig. 5D, the pieces of determination-purposed meteorological data O corresponding to the four evaluation meteorological parameters are arranged in a predetermined arrangement so that the pieces of determination-purposed meteorological data O are arranged in the same arrangement as that of the pieces of turbulence prediction pattern data and combined to make the one set of combined determination-purposed meteorological data O'. That is, the one set of combined determination-purposed meteorological data O' is made in such a manner as to arrange (a) the east-west component of wind speed at the top left, (b) the north-south component of wind speed at the top right, (c) the east-west component of vertical wind shear at the bottom left, and (d) the north-south component of the vertical direction at the bottom right. The made one set of combined determination-purposed meteorological data O' is stored in the memory unit or the storage device 22. This is performed repeatedly over the whole arbitrary wide area.

Subsequently, the one set of combined turbulence prediction pattern data N', which is the teacher data, is read from the memory unit or the storage device 22. Then, the read one set of combined turbulence prediction pattern data N' is compared with the one set of combined determination-purposed meteorological data O' to calculate the degree of similarity therebetween (S215), and the degree of similarity is determined as the degree of possibility of the occurrence of a turbulence (S215). The process S214 and the process S215 are the same as the process S113 and the process S114 in Embodiment 1, respectively. Therefore, the explanation thereof will be omitted. In the comparison between the one set of combined turbulence prediction pattern data N' and the one set of combined determination-purposed meteorological data O' over the whole prediction area, a computer compares turbulence prediction pattern data N regarding each of the meteorological parameters of which the one set of combined turbulence prediction pattern data N' consists with determination-purposed meteorological data O regarding the corresponding one of the meteorological parameters of which the one set of combined determination-purposed meteorological data O' consists. In this point, the independent comparison is the same as in Embodiment 1. The comparison between the turbulence prediction pattern data N regarding each of the meteorological parameters of which the one set of combined turbulence prediction pattern data N' consists and the determination-purposed meteorological data O regarding the corresponding one of the meteorological parameters of which the one set of combined determination-purposed meteorological data O' consists is performed in such a manner as to shift one by one divided sections of which the turbulence prediction pattern data N consists and divided sections of which the determination-purposed meteorological data O consists.

In the case of Embodiment 2, a plurality of evaluation meteorological parameters can be selected. Therefore, a plurality of meteorological parameters that is involved in a complicated mechanism of turbulence can be used as the evaluation meteorological parameters, which provides such an advantageous effect that the accuracy of the determination of the calculated degree of possibility of the occurrence of a turbulence can be made even higher than in Embodiment 1.

### (Embodiment 3)

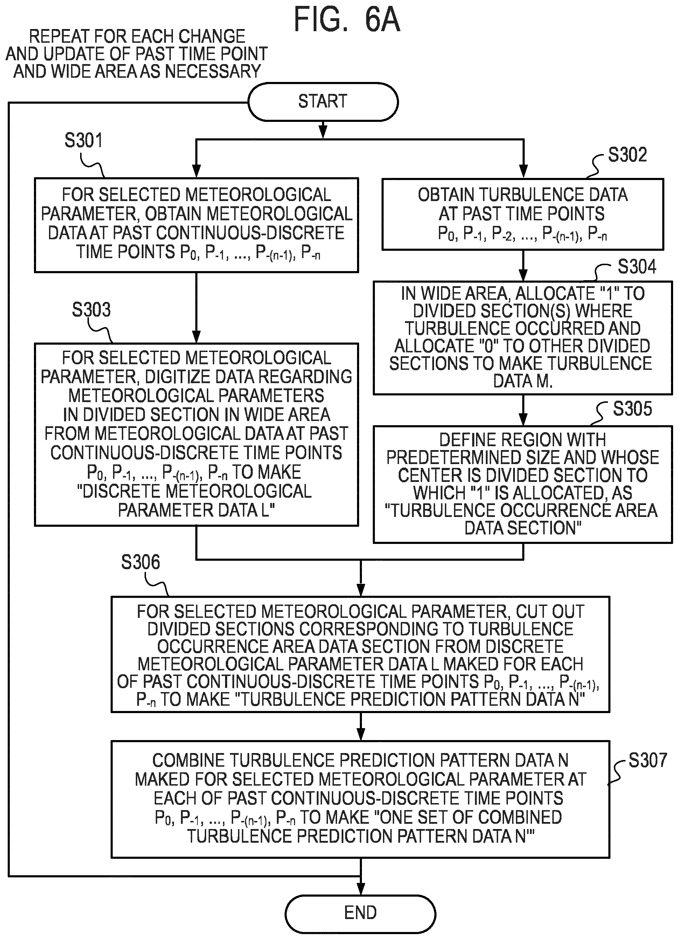

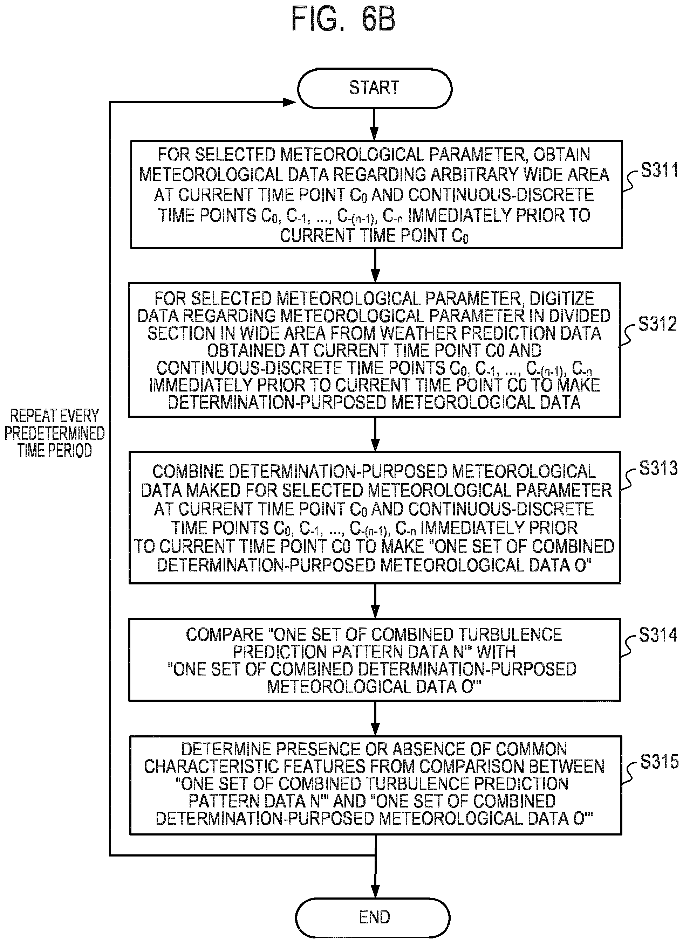

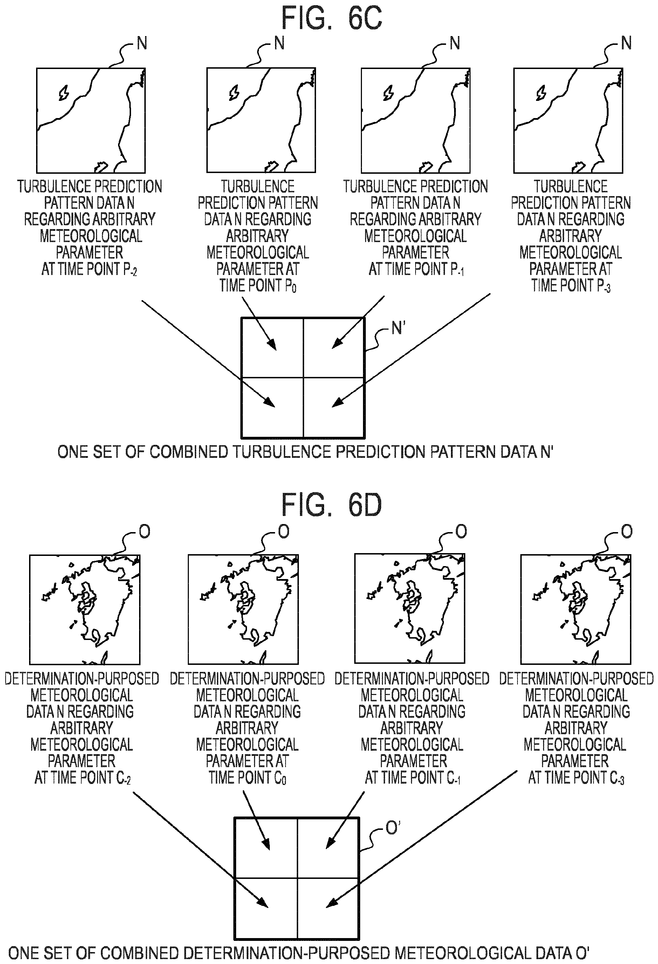

Subsequently, with reference to Fig. 6A and 6B, the turbulence prediction process of Embodiment 3 will be explained. Embodiment 3 corresponds to the third turbulence prediction pattern principle in the embodiment. Also in Embodiment 3, as in Embodiment 1 and Embodiment 2, the turbulence prediction process including the learning process 11 and the determination process 12 is performed. Fig. 6A illustrates a flowchart of the learning process 11 of the turbulence prediction process of Embodiment 3, and Fig. 6B illustrates a flowchart of the determination process 12 of the turbulence prediction process of Embodiment 3. Also in Embodiment 3, as in Embodiment 1 and Embodiment 2, in the learning process, past meteorological data and past observation data obtained by actual observation by the aircraft are used to make turbulence prediction pattern data. This point is common. In contrast, Embodiment 3 is different from Embodiment 1 and Embodiment 2 in that weather predict data is not used in the determination process. In Embodiment 3, current meteorological data and meteorological data immediately prior to the current meteorological data are used rather than weather predict data. That is, while Embodiment 1 and Embodiment 2 are an approach of imaging predicted meteorological data and comparing the degrees of similarity of the predicted meteorological data, in Embodiment 3, the current meteorological data and meteorological data immediately prior to the current meteorological data are used to make determination-purposed meteorological data O, the degrees of similarity with pieces of turbulence prediction pattern data N are compared, and the occurrence of a turbulence is predicted from trends in changes in chronological order.

In addition, Embodiment 3 is the same as Embodiment 1 and different from Embodiment 2 in that one meteorological parameter is selected. A major example of the meteorological parameters α, β, γ, ... in Embodiment 3 is as follows. This is merely a major example, and other types of meteorological parameters can be selected as the meteorological parameter α, β, γ, .... From among the following meteorological parameters α, β, γ, ..., one meteorological parameter is used.
(1) Meteorological Parameter α = Absolute Value of Vertical Wind Shear
(2) Meteorological Parameter β = Vertical Temperature Gradient
(3) Meteorological Parameter γ = Vertical Air Density Gradient
(4) Meteorological Parameter δ = Cloud Image in Satellite Photograph (infrared radiance temperature, visible image, water vapor image)

In Embodiment 2, a plurality of evaluation meteorological parameters is selected, and pieces of turbulence prediction pattern data N for the plurality of evaluation meteorological parameters are combined to make the one set of turbulence prediction pattern data N'. In contrast, in Embodiment 3, one meteorological parameter is selected, pieces of determination-purposed meteorological data O that are a piece of meteorological data at the current time point C₀ and pieces of meteorological data at a plurality of immediate continuous time points C₋₁, C₋₂, ..., C₋₍ₙ₋₁₎, C₋ₙ that are sampled at predetermined discrete intervals from the current time point C₀ toward the past are combined to make one set of combined determination-purposed meteorological data O'. As a representative example of the evaluation meteorological parameter in Embodiment 3, for example, a cloud Image in a satellite photograph as the meteorological parameter δ, for example, an infrared radiance temperature, a visible image, a water vapor image, or the like.

Fig. 6A is a flowchart of making turbulence prediction pattern data N as teacher data in the learning process 11 of the turbulence prediction process of Embodiment 3. A process S301 to a process 306 in Embodiment 3 are basically the same as the process 101 to the process 106 of Embodiment 1. The process S301 to the process 306 in Embodiment 3 are different from the process 101 to the process 106 of Embodiment 1 in that a plurality of pieces of turbulence prediction pattern data N is made from a plurality of pieces of meteorological data at the past discrete time points P₀, P₋₁, P₋₂, ..., P₋₍ₙ₋₁₎, P₋ₙ. The number of the past discrete time points P₀, P₋₁, P₋₂, ..., P₋₍ₙ₋₁₎, P₋ₙ needs to be the same as the number of the current time point C₀ for which the determination-purposed meteorological data O to be used in the determination process 12 is made and time points selected as the plurality of immediate continuous time points C₋₁, C₋₂, ..., C₋₍ₙ₋₁₎, C₋ₙ prior to the current time point C₀. Here, as an example, four time points that are past discrete time points P₀, P₋₁, P₋₂, P₋₃ are selected when the pieces of turbulence prediction pattern data N are selected, and four time points C₀, C₋₁, C₋₂, C₋₃ including the current time point C₀, which is the same in number as the past discrete time points, is determined as the number of time points when the determination-purposed meteorological data O is made. Here, as an example, the continuous time unit is set to 4 hours, and a predetermined time unit is set to 1 hour. In the process of the learning process 11, pieces of meteorological data at the time points including meteorological data (t = 0) at the past arbitrary time point P₀, meteorological data (t = -1) at the time point P₋₁ that is 1 hour ago from the past arbitrary time point, meteorological data (t = -2) at the time point P₋₂ that is 2 hours ago from the current time point, and meteorological data (t = -3) at the time point P₋₃ that is 3 hours ago from the current time point are obtained, and the process S301 to the process 306 are performed.

That is, the process S301 to the process S306 are the same as the processes S101 to S106 in Embodiment 1 that has already been explained as long as the pieces of turbulence prediction pattern data N are made at the four past discrete time points P₀, P₋₁, P₋₂, P₋₃. In the case where a cloud image of water vapor in a satellite photograph is selected as the meteorological parameter, the past meteorological data means that a cloud image of water vapor at the corresponding time point obtained. At this time, the digitization is defined as that including a movement direction vector of an arbitrary meteorological parameter element at each of divided sections of which a mesh consists for calculation is indicated as an arrow in cloud images (water vapor) at continuous time units.

In the process S306, the pieces of turbulence prediction pattern data N at the four past discrete time points P₀, P₋₁, P₋₂, P₋₃ are arranged in a predetermined arrangement and combined. For example, the one set of combined turbulence prediction pattern data N' is made in such a manner as to arrange (a) t = 0 hour at the top left, (b) t = -1 hour at the top right, (c) t = -2 hour at the bottom left, and (d) t = -3 hour at the bottom right, assuming that the completed one set of combined turbulence prediction pattern data N' is to be divided into four. In addition, this data is stored in the memory unit or the storage device 22 as necessary (S307). This predetermined arrangement is not limited to a particular arrangement but needs to facilitate the grasping of time-time-dependent changes and has to be the same as an arrangement of a plurality of pieces of determination-purposed meteorological data O at the continuous time points C₀, C₋₁, C₋₂, C₋₃ to make one set of combined determination-purposed meteorological data O' in the determination process 12. These process S301 to process S307 are performed repeatedly over the whole arbitrary wide area.

Fig. 6B illustrates a flowchart of the determination process 12 of the turbulence prediction process of Embodiment 3. In the determination process 12 of Embodiment 3, pieces of meteorological data regarding an arbitrary wide area are obtained by a plurality of time points of the continuous time points C₀, C₋₁, C₋₂, C₋₃ (S311). Here, from the process S301 to the process S306, as an example, the pieces of turbulence prediction pattern data N for a past continuous time period of 4 hours are made with the predetermined time unit set to 1 hour. Thus, similarly, pieces of current meteorological data for a continuous time period of 4 hours are made with the predetermined time unit set to 1 hour are obtained to make the pieces of determination-purposed meteorological data O. That is, pieces of meteorological data at the time points including the meteorological data (t = 0) at the current time point C₀, the meteorological data (t = -1) at the time point C₋₁ that is 1 hour ago from the current time point, the meteorological data (t = -2) at the time point C₋₂ that is 2 hours ago from the current time point, and the meteorological data (t = -3) at the time point C₋₃ that is 3 hours ago from the current time point are obtained (S311). Then, from the obtained weather predict data, evaluation meteorological parameters in divided sections into which the arbitrary wide area is divided are digitized to make the determination-purposed meteorological data O (S312). In the determination process 12, the divided sections of which the wide area consists in the determination-purposed meteorological data O has to be the same as divided sections of which the wide area of the turbulence prediction pattern data N in the learning process 11.

The plurality of pieces of determination-purposed meteorological data O at the plurality of continuous time points C₀, C₋₁, C₋₂, C₋₃ made in the previous process (S312) is combined to make one set of combined pseudo time-dependent meteorological image data (S313). As to a method of arrangement for combining the plurality of pieces determination-purposed meteorological data O to make the one set of combined determination-purposed meteorological data O', the plurality of pieces of determination-purposed meteorological data O has to be arranged in the same order (positions) as in the method of arrangement for making the one set of turbulence prediction pattern data in the process 307 in the learning process 11. That is, according to this example, as illustrated in Fig. 6D, the plurality of pieces of determination-purposed meteorological data O are arranged in such a manner as to arrange (a) t = 0 hour at the top left, (b) t = -1 hour at the top right, (c) t = -2 hour at the bottom left, and (d) t = -3 hour at the bottom right to make the one set of combined determination-purposed meteorological data O' (S313).

Subsequently, the one set of combined turbulence prediction pattern data N', which is the teacher data, is read from the memory unit or the storage device 22. Then, the read one set of combined turbulence prediction pattern data N' is compared with the one set of combined determination-purposed meteorological data O' to calculate the degree of similarity therebetween (S314), and the degree of similarity is determined as the degree of possibility of the occurrence of a turbulence (S315). The process S314 and the process S315 are the same as in Embodiment 1 and Embodiment 2. Therefore, the explanation thereof will be omitted. As a method of the comparison, as in Embodiment 2, divided sections of which the turbulence prediction pattern data N at each time point consists, of which the combined turbulence prediction pattern data N' consists is compared with divided sections of which the determination-purposed meteorological data O at each time consists, of which the combined determination-purposed meteorological data O' consists. The independent comparison is the same as in Embodiment 1.

In Embodiment 3, the one set of combined determination-purposed meteorological data O' is made based on the pieces of meteorological data at time points from t = 0 hour as the current time point to t = -3 hour got back from the current time point and compared with the one set of combined turbulence prediction pattern data N'. Therefore, the comparison and the degrees of similarity between both pieces of data of Embodiment 3 are different from those of Embodiment 1 and Embodiment 2 in that the comparison is merely between past pieces of data. Therefore, in the case where a part at t = -3 hour has a high degree of similarity to a past image where a turbulence occurred is high, and a part at t = 0 hour has a low degree of similarity to the past image where the turbulence occurred, a probability of the occurrence of a turbulence can be determined to be low. Conversely, in the case where a part at t = 0 hour has a high degree of similarity to a past image where a turbulence occurred is high, and a part at t = -3 hour has a low degree of similarity to the past image where the turbulence occurred, a probability of the occurrence of a turbulence can be determined to be high. Therefore, when a difference made by subtracting the degree of similarity at t = -3 hour from the degree of similarity at t = 0 hour is a positive value, there is a possibility of the occurrence of a turbulence, and the average value of the degrees of similarity at time points from t = 0 hour to t = -3 hour can be determined as a probability of the occurrence of a turbulence. Alternatively, the probability of the occurrence of a turbulence may be defined with weighting.

In the case of Embodiment 3, an approach of calculating the degree of similarity to a past image where a turbulence occurred based on time-dependent past meteorological data is adopted, and thus trends in time-dependent changes of the occurrence of a turbulence are directly included in the calculation, which provides an advantageous effect of grasping the occurrence of a turbulence from current meteorological data, not based on weather predicts.

### (Embodiment 4)

Subsequently, the turbulence prediction process of Embodiment 4 will be explained. Embodiment 4 corresponds to the fourth turbulence prediction pattern principle in the embodiment. In Embodiment 4, in the learning process 11, one set of combined turbulence prediction pattern data N' as the teacher data is made by the same method as in Embodiment 2. As the selection of the arbitrary meteorological data, Embodiment 2 is applicable. In addition, in Embodiment 4, when the one set of combined turbulence prediction pattern data N' is made, starting from the past time point P₀ of the creation, one sets of combined turbulence prediction pattern data N' are similarly made for a predetermined number of past time points (P₀, P₋₁, P₋₂, P₋₃) got back in the past. A series of one sets of combined turbulence prediction pattern data N' at the past time points (P₀, P₋₁, P₋₂, P₋₃) is used as the teacher data. Meanwhile, similarly, in the determination process, in the determination process 12, one sets of combined determination-purposed meteorological data O' as the teacher data are made from the weather predict data by the same method as in Embodiment 2. At this time, a series of one sets of combined determination-purposed meteorological data O' are similarly made for the predetermined number of future time points (F₀, F₋₁, F₋₂, F₋₃). Then, in the determination process, the presence or absence of characteristic features of the series of one sets of combined turbulence prediction pattern data N' with respect to the series of one sets of combined determination-purposed meteorological data O' is determined. In Embodiment 2, the presence or absence of common characteristic features is determined by comparing still images at one time point. In Embodiment 4, in addition to the presence or absence of common characteristic features by comparing still images at each time point, the presence or absence of common characteristic features in dynamic changes over time at the predetermined number of time points is added to the determination. While a convolutional neural network (CNN) is applicable to Embodiment 2, a recurrent neural network (RNN) is applicable to Embodiment 4.

### (Embodiment 5)

Subsequently, the turbulence prediction process of Embodiment 5 will be explained. Embodiment 5 corresponds to the fifth turbulence prediction pattern principle in the embodiment. Embodiment 5 is a method in which Embodiment 1 and Embodiment 3 are mixed together. First, in the learning process 11, turbulence prediction pattern data N as the teacher data is made by the same method as in Embodiment 1. As the selection of the arbitrary meteorological data, Embodiment 1 is applicable. In addition, in Embodiment 5, when the turbulence prediction pattern data N is made, starting from the past time point P₀ of the creation, pieces of turbulence prediction pattern data N are similarly made for a predetermined number of past time points (P₀, P₋₁, P₋₂, P₋₃) got back in the past. The series of pieces of turbulence prediction pattern data N at the past time points (P₀, P₋₁, P₋₂, P₋₃) is used as the teacher data.

Meanwhile, similarly, in the determination process, in the determination process 12, determination-purposed meteorological data O as the teacher data is made from the meteorological data at the current time point C₀ by the same method as in Embodiment 3. At this time, pieces of determination-purposed meteorological data are similarly made for the predetermined number of current time points (C₀, C₋₁, C₋₂, C₋₃) including a time point got back from the current time point C₀ to make a series of pieces of determination-purposed meteorological data O. Then, in the determination process, the presence or absence of characteristic features of the series of pieces of turbulence prediction pattern data N with respect to the series of pieces of determination-purposed meteorological data O is determined. In Embodiment 1 and Embodiment 3, the presence or absence of common characteristic features is determined by comparing still images at one time point. In Embodiment 5, in addition to the presence or absence of common characteristic features by comparing still images at each time point, the presence or absence of common characteristic features in dynamic changes over time at the predetermined number of time points is added to the determination. While a convolutional neural network (CNN) is applicable to Embodiment 1 and Embodiment 3, a recurrent neural network (RNN) is applicable to Embodiment 5.

### Reference Signs List

1 turbulence prediction system
2, 2a, 2b turbulence prediction apparatus
3, 3a, 3b terminal
4, 4a, 4b transmitting/receiving apparatus (antenna)
5 aircraft
6 network
7 cloud
11 learning process
12 determining process
21 central processing unit
22 memory device
23 output device
24 communication device

## Claims

1. A turbulence prediction system comprising a calculation unit and a memory unit storing a plurality of turbulence prediction pattern data regarding arbitrary meteorological parameters, for predicting a zone having a possibility in which a turbulence highly causes among prediction areas at a determination time point,
wherein each of the plurality of turbulence prediction pattern data regarding arbitrary meteorological parameters is made based on meteorological data regarding arbitrary meteorological parameters of a zone where a turbulence caused in the past,
wherein the calculation unit makes determination-purposed meteorological data about the prediction areas at the determination time point based on meteorological data regarding the arbitrary meteorological parameters,
wherein the calculation unit performs a calculation to obtain a high similarity part between the determination-purposed meteorological data and each of the plurality of turbulence prediction pattern data so that the high similarity part is determined as the zone having a possibility in which a turbulence highly causes among the prediction areas.

2. A turbulence prediction system according to claim 1,
wherein the arbitrary meteorological parameters are a plurality of meteorological parameters,
wherein the plurality of turbulence prediction pattern data are made for each of the plurality of meteorological parameters,
wherein the determination-purposed meteorological data are made for each of the plurality of meteorological parameters,
wherein the calculation to obtain a high similarity part is performed about each of the plurality of meteorological parameters by a comparison between the determination-purposed meteorological data and the plurality of turbulence prediction pattern data.

3. A turbulence prediction system according to claim 2,
wherein the turbulence prediction pattern data about each of the plurality of meteorological parameters are formed as combined turbulence prediction pattern data by allocating the plurality of turbulence prediction pattern data about each of the plurality of meteorological parameters in a predetermined allocation about each of the plurality of meteorological parameters, and
the determination-purposed meteorological data about each of the plurality of meteorological parameters are formed as combined determination-purposed meteorological data by allocating the determination-purposed meteorological data about each of the plurality of meteorological parameters in a same allocation as the predetermined allocation to form combined determination-purposed meteorological data.

4. A turbulence prediction system according to any one of claims 1 to 3,
wherein the plurality of turbulence prediction pattern data are made as a plurality of groups including predetermined plural time-points with predetermined time intervals,
wherein the determination-purposed meteorological data is made as data of the arbitrary meteorological parameters including predetermined time-points with predetermined time intervals,
wherein the calculation to obtain a high similarity part is performed by a comparison based on a comparison of characteristics focused on time-dependent changes at the predetermined plural time-points, between the determination-purposed meteorological data and each of the data of the plurality of groups including the plurality of turbulence prediction pattern data.

5. A turbulence prediction system according to claim 1,
wherein the prediction areas are divided into a plurality of divided sections,
wherein the each of the plurality of turbulence prediction pattern data regarding arbitrary meteorological parameters is data made by quantifying and allocating meteorological data at arbitrary discrete time points in the past regarding an arbitrary meteorological parameter in each of the plurality of divided sections that is included in an area with a predetermined size and whose center is a zone where turbulence occurred at an arbitrary discrete time points in the past, for each of the plurality of divided sections,
wherein the determination-purposed meteorological data is data made by obtaining meteorological data regarding the arbitrary meteorological parameters from the prediction areas at the determination time point, and quantifying and allocating the obtained meteorological data, for each of the plurality of divided sections.

6. A turbulence prediction system according to claim 5,
wherein the determination-purposed meteorological data is made to have an area that is a same as the predetermined size and a plurality of divided sections, wherein the calculation to obtain the high similarity part is performed by a comparison between the determination-purposed meteorological data and the plurality of turbulence prediction pattern data by shifting relatively one by one divided sections of which the plurality of turbulence prediction pattern data consist and divided sections of which the determination-purposed meteorological data consist.

7. A turbulence prediction system according to claim 5, wherein the arbitrary meteorological parameters are a plurality of meteorological parameters,
wherein the plurality of turbulence prediction pattern data are made for each of the plurality of meteorological parameters, and made to be a plurality of combined turbulence prediction pattern data made as one in which a plurality of turbulence prediction pattern data made for each of the plurality of meteorological parameters are aligned in a predetermined position-pattern,
wherein the determination-purposed meteorological data are made for each of the plurality of meteorological parameters, and made to be combined determination-purposed meteorological data made as one in which the plurality of determination-purposed meteorological data made for each of the plurality of meteorological parameters are aligned in a position pattern same as the predetermined position-pattern.

8. A turbulence prediction system according to claim 7, wherein the calculation to obtain the similarity part is performed by shifting relatively divided sections per a corresponding meteorological parameter one by one, each of which the turbulence prediction pattern data regarding each of the plurality of meteorological parameters of which the plurality of combined turbulence prediction pattern data consist and the determination-purposed meteorological data regarding each of the plurality of meteorological parameters of which the plurality of determination-purposed meteorological data consist.

9. A turbulence prediction system according to any one of claims 5 to 8,
wherein the plurality of turbulence prediction pattern data is made so that each of the turbulence prediction pattern data including a plurality of groups having data at a predetermined number of time points with a predetermined time interval between each of the time points,
wherein the determination-purposed meteorological data is made with data with the predetermined number of the time points with the predetermined time interval for each of the meteorological parameters,
wherein the calculation to obtain a high similarity part is performed based on a comparison of the characteristic features of a time-dependent change at the predetermined number of the time points in a comparison between data of each of the plurality of groups of which the determination-purposed meteorological data and the plurality of turbulence prediction pattern data consist.

10. A turbulence prediction system according to any
one of claims 1 to 9, wherein the determination-purposed meteorological data is weather predict data.

11. A turbulence prediction system according to claim 1,
wherein the arbitrary meteorological parameter is one meteorological parameter,
wherein the plurality of turbulence prediction pattern data are data that are obtained by quantifying past meteorological data at arbitrary discrete time points in the past regarding an arbitrary meteorological parameter in each of the plurality of divided sections that is included in an area with a predetermined size and whose center is a zone where turbulence occurred, and each of a predetermined number of the continuous-discrete time points each having a predetermined time interval from the arbitrary discrete time points, allocating them to each of the plurality of divided sections, and combining the digitized and allocated data into one to be aligned in the position pattern as a plurality of combined turbulence prediction pattern data,
wherein the determination-purposed meteorological data are made, for the arbitrary meteorological parameters, by combining a plurality of determination-purposed meteorological data made based on meteorological data at each of a determination time point and the predetermined number of the continuous-discrete time points got back from the determination time point into one as a combined determination-purposed meteorological data to be aligned in a position pattern same as the predetermined position- pattern, and
wherein the calculation to obtain a high similarity part is performed respectively by replacing the determination-purposed meteorological data with the combined determination-purposed meteorological data, and the plurality of turbulence prediction pattern data with the plurality of combined turbulence prediction pattern data.

12. A turbulence prediction system according to claim 11,
wherein the calculation to obtain a high similarity part is performed by a comparison per a corresponding meteorological parameter between the turbulence prediction pattern data for each of the plurality of meteorological parameters of which the plurality of combined turbulence prediction pattern data consist and the determination-purposed meteorological data for each of the plurality of meteorological parameters of which the plurality of determination-purposed meteorological data consist, by shifting relatively one by one divided sections of which the turbulence prediction pattern data consist and divided sections of which the determination-purposed meteorological data consist.

13. A turbulence prediction system according to claim 1,
wherein the arbitrary meteorological parameter is one meteorological parameter,
wherein the plurality of turbulence prediction pattern data are made to be a group of a plurality of data obtained by quantifying past meteorological data at arbitrary discrete time points in the past regarding an arbitrary meteorological parameter in each of the plurality of divided sections that is included in an area with a predetermined size and whose center is a zone where turbulence occurred, and each of a predetermined number of the continuous-discrete time points each having a predetermined time interval from the arbitrary discrete time points, allocating them to each of the plurality of divided sections,
wherein the determination-purposed meteorological data are made, for the arbitrary meteorological parameters, to be a group of a plurality of data obtained based on meteorological data at each of a determination time point and the predetermined number of the continuous-discrete time points got back from the determination time point, and
wherein the calculation to obtain a high similarity part is performed respectively by a comparison based on a comparison of characteristics focused on time-dependent changes at the plural time-points, between the determination-purposed meteorological data and each of the data of the plurality of groups including the plurality of turbulence prediction pattern data.

14. A turbulence prediction system according to any one of claims 1 to 13,
wherein the plurality of turbulence prediction pattern data are a large number of turbulence prediction pattern data acquired over a long time period in the past,
wherein calculation to obtain a high similarity part is based on degree to which at least part of any one of the large number of turbulence prediction patterns is included in the determination-purposed meteorological data.

15. A turbulence prediction system according to any one of claims 1 to 9,
wherein the plurality of turbulence prediction pattern data are a large number of turbulence prediction pattern data acquired over a long time period in the past,
wherein calculation to obtain a high similarity part is performed by a convolutional neural network so that the large number of the turbulence prediction pattern data is used as a convolutional neural network layer.

16. A turbulence prediction system according to claim 4 or 13, wherein calculation to obtain a high similarity part is performed by a recurrent neural network.

17. A turbulence prediction system according to any one of claims 1 to 16,
wherein the turbulence prediction system comprises a turbulence prediction apparatus connected to a network, wherein the turbulence prediction apparatus includes a memory unit and a calculation unit.

18. A turbulence prediction system according to any one of claims 1 to 16,
wherein he turbulence prediction system is a cloud computing system in which the calculation unit and the memory unit are connected via a network.

19. A turbulence prediction system according to claim 17 or 18,
wherein the turbulence prediction system has a terminal connected to the network,
wherein an output from the turbulence prediction system is sent to the terminal.

20. A turbulence prediction system according to any one of claims 17 to 19,
wherein the turbulence prediction system comprises a communication unit,
wherein the turbulence prediction system comprises an aircraft,
wherein the communication unit is connected to the network and transmits an output of a prediction result of occurrence of the turbulence to the aircraft.

21. A turbulence prediction method of predicting a possibility in which a turbulence causes in prediction areas at a determination time point, by a turbulence prediction system comprising a memory unit and a calculation unit,
wherein the turbulence prediction method comprises a learning process and a determination process,
wherein the learning process includes storing a plurality of turbulence prediction pattern data based on meteorological data regarding arbitrary meteorological parameters of a zone where a turbulence caused in the past, by the calculation unit,
wherein the determination process includes making determination-purposed meteorological data based on meteorological data regarding the arbitrary meteorological parameters in the prediction areas by the calculation unit, and a process to calculate a similarity each of between the determination-purposed meteorological data and the plurality of turbulence prediction pattern data and determine a high similarity portion as a zone having a possibility in which a turbulence highly causes in an arbitrary area among the prediction areas, by the calculation unit.

22. A turbulence prediction method according to claim 21,
wherein the arbitrary meteorological parameters are a plurality of meteorological parameters,
wherein the plurality of turbulence prediction pattern data are made for each of the plurality of meteorological parameters,
wherein the determination-purposed meteorological data is made for each of the plurality of meteorological parameters,
wherein the calculation to obtain a high similarity part is performed about each of the plurality of meteorological parameters by a comparison between the determination-purposed meteorological data and the plurality of turbulence prediction pattern data.

23. A turbulence prediction method according to claim 22,
wherein the learning process includes allocating the plurality of turbulence prediction pattern data about each of the plurality of meteorological parameters in a predetermined allocation about each of the plurality of meteorological parameters to form combined turbulence prediction pattern data,
wherein the determination process includes allocating the determination-purposed meteorological data about each of the plurality of meteorological parameters in the predetermined allocation to form combined determination-purposed meteorological data.

24. A turbulence prediction method according to any one of claims 21 to 23,
wherein the plurality of turbulence prediction pattern data is made as a plurality of groups including predetermined plural time-points with predetermined time intervals,
wherein the determination-purposed meteorological data is made as data of the arbitrary meteorological parameters including predetermined plural time-points with predetermined time intervals,
wherein the calculation to obtain a high similarity part is performed by a comparison based on a comparison of characteristics focused on time-dependent changes at the predetermined plural time-points, between the determination-purposed meteorological data and each of the data of the plurality of groups including the plurality of turbulence prediction pattern data.

25. A turbulence prediction method according to claim 21,
wherein the prediction areas are divided into a plurality of divided sections,
wherein the each of the plurality of turbulence prediction pattern data regarding arbitrary meteorological parameters is data made by quantifying and allocating meteorological data at arbitrary discrete time points in the past regarding an arbitrary meteorological parameter in each of the plurality of divided sections that is included in an area with a predetermined size and whose center is a zone where turbulence occurred at an arbitrary discrete time points in the past, for each of the plurality of divided sections,
wherein the determination-purposed meteorological data is data made by obtaining meteorological data regarding the arbitrary meteorological parameters from the prediction areas at the determination time point, and quantifying and allocating the obtained meteorological data, for each of the plurality of divided sections.
